(19) Europäisches Patentamt
European Patent Office
Office européen des brevets

(11) EP 2 486 808 B1

(12) EUROPEAN PATENT SPECIFICATION

(45) Date of publication and mention of the grant of the patent:
**08.03.2017 Bulletin 2017/10**

(21) Application number: **09850229.7**

(22) Date of filing: **06.10.2009**

(51) Int Cl.:
*A23F 3/16* (2006.01) *A23L 2/02* (2006.01)
*A23L 2/06* (2006.01) *A23L 2/52* (2006.01)
*A23L 29/00* (2016.01) *A23L 29/206* (2016.01)
*A23L 33/105* (2016.01) *A23L 33/12* (2016.01)

(86) International application number:
**PCT/JP2009/067435**

(87) International publication number:
**WO 2011/042958 (14.04.2011 Gazette 2011/15)**

(54) **POLYPHENOL COMPOUND ABSORPTION PROMOTER AND UTILIZATION OF SAME**
ABSORPTIONSPROMOTER FÜR POLYPHENOLVERBINDUNG UND SEINE VERWENDUNG
PROMOTEUR D'ABSORPTION D'UN COMPOSÉ POLYPHÉNOL ET SON UTILISATION

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**15.08.2012 Bulletin 2012/33**

(73) Proprietor: **Morinaga & Co., Ltd.**
**Tokyo 108-8403 (JP)**

(72) Inventors:
- **YANAE Koji**
**Yokohama-shi**
**Kanagawa 230-8504 (JP)**
- **KAWAKAMI Shinpei**
**Yokohama-shi**
**Kanagawa 230-8504 (JP)**
- **KATO Masatoshi**
**Yokohama-shi**
**Kanagawa 236-0003 (JP)**
- **SETOGUCHI Yuko**
**Yokohama-shi**
**Kanagawa 230-8504 (JP)**
- **SUGITANI Masanori**
**Yokohama-shi**
**Kanagawa 230-8504 (JP)**

(74) Representative: **Denison, Christopher Marcus et al**
**Mewburn Ellis LLP**
**City Tower**
**40 Basinghall Street**
**London EC2V 5DE (GB)**

(56) References cited:
**WO-A1-01/00038** **WO-A1-2007/039452**
**WO-A1-2008/143182** **JP-A- 2001 270 881**
**JP-A- 2002 142 677** **JP-A- 2003 333 989**
**JP-A- 2004 041 186** **JP-A- 2006 232 805**
**JP-A- 2007 330 124** **JP-A- 2008 280 256**
**JP-A- 2009 247 282** **US-A1- 2008 319 052**

- **MARI MAEDA-YAMAMOTO ET AL: "In vitro and in vivo anti-allergic effects of 'benifuuki' green tea containing O-methylated catechin and ginger extract enhancement", CYTOTECHNOLOGY, KLUWER ACADEMIC PUBLISHERS, DO, vol. 55, no. 2-3, 25 November 2007 (2007-11-25), pages 135-142, XP019550388, ISSN: 1573-0778, DOI: 10.1007/S10616-007-9112-1**
- **L CHEN ET AL: 'Absorption, distribution, and elimination of tea polyphenols in rats' DRUG METABOLISM AND DISPOSITION, [Online] 01 January 1997, pages 1045 - 1050, XP055259807 Retrieved from the Internet: <URL:http://dmd.aspetjournals.org/content/25/9/1045.full.pdf> [retrieved on 2016-03-18]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 486 808 B1

## Description

Technical Field

The present invention relates to an absorption promoter for a polyphenol compound and a use thereof.

Background Art

Green tea is a drink which has been familiar to Japanese through the ages, and has been drunk by very many people through widespread use of packaged green tea drinks in recent years. The green tea contains a group of catechin compounds (flavanol compounds) collectively referred to as tea catechin and is known to have a number of functions beneficial for health, such as an anti-tumor effect, an anti-platelet aggregation effect, an anti-hypertension effect, an anti-obesity effect, and an anti-oxidation effect. However, in general, even when the catechin compounds are ingested orally, only a small percentage of amounts of the compounds ingested are absorbed into the body because rates of absorption of the compounds are low. Therefore, many attempts to enhance absorbability of the catechin compounds have been made.

For example, Patent Literature 1 below discloses a method of increasing an absorption amount and a blood concentration of a tea catechin by increasing a concentration of the tea catechin in a green tea drink to increase an ingestion amount of the tea catechin. However, the method has problems, for example, in that there is a limitation to the amount of the tea catechin which may be added to the green tea drink because a bitter taste or a harsh taste peculiar to the tea catechin strongly appears, and in that an economic burden increases because a large amount of the tea catechin is used as a raw material. Meanwhile, Patent Literature 2 below discloses a method of increasing a rate of absorption of a tea catechin by reducing an amount of an alcohol-precipitable substance in a drink. However, the method has a problem in that procedures such as purification and an enzymatic treatment need to be additionally performed to reduce the amount of the alcohol-precipitable substance to a certain content or less, resulting in complicated production steps and an increase in cost. Further, there is known a method of increasing a rate of absorption of a tea catechin by blending epi and non-epi forms of a tea catechin contained in a black tea drink so that contents of the forms satisfy a certain condition (see Patent Literature 3 and Patent Literature 4 below). However, requirements for the contents of the epi and non-epi forms are usually satisfied in green tea or the like which is drunk in households. Hence, the method is hardly applicable to foods and drinks other than the black tea drink among packaged drinks. Further, Patent Literature 5 below discloses a method of promoting absorption of epigallocatechin gallate by blending epigallocatechin gallate and caffeine in green tea so that contents of epigallocatechin gallate and caffeine satisfy a predetermined relationship. However, it is necessary to perform a treatment for removing caffeine by, for example, a chromatography treatment using a synthetic adsorbent column, which may impair original taste and flavor ingredients.

[PTL 1] JP 2002-142677 A
[PTL 2] JP 2003-169641 A
[PTL 3] JP 2003-333989 A
[PTL 4] JP 2004-41186 A
[PTL 5] JP 2007-151467 A

US 2008/319052 A1 discloses a fat accumulation suppressor comprising a constitutive effective amount of an O-methylated catechin, in particular EGCG-Me, obtained by extraction of leaves of tea selected form the varieties "Benifuuki", "Benifuji", "Benihomare", "Yaeho", "Surugawese", "Yutakamidori", "Kanayamidori", "Okumusashi", "Seishin-taipan", "Seishin-oolong", "Oba'oolong", "Benibana", "Benihikari" "Yamakai" "Yamamidori" "Karabeni" "Koushun", "Souhu" and "Okumidori", and any mixture thereof.

Maeda-Yamamoto et al., Cytotoechnology (2007) 55:135-142 discloses that Benifuuki green tea is rich in methylated epigallocatechin-3-*O*-(3-*O*-methyl) gallate (EGCG3"-Me), and investigates absorption of EGCG3"-Me and epigallocatechin gallate (EGCG) after drinking Benifuuki green tea. Drinking Benifuuki green tea is disclosed to be useful for reducing the symptoms of Japanese cedar pollinosis.

Summary of Invention

Technical Problem

As described above, green tea contains a group of catechin compounds (flavanol compounds) collectively referred to as tea catechin and is known to have a number of functions beneficial for health, such as an anti-tumor effect (Katiyar SK and Mukhtar H (1996) Int J Oncol 7:133-141; Bu-Tian JI et al. (1997) Int J Cancer 70:255-258; Su LJ and Arab L (2002) Public Health Nutr 5:419-425), an anti-platelet aggregation effect (Duffy SJ et al. (2001) Arterioscler Thromb Vasc 21:1084-1089), an anti-hypertention effect (Negishi H et al. (2005) J Nutr 134:38-42), an anti-obesity effect (Nagao T et al. (2005) Am J Clin Nutr 81:122-9; Murase T et al. (2002) Int J Obes 26:1459-64), and an anti-oxidation effect (Sano M et al. (2003) J Agric Food Chem 51:2912-2916). Green tea contains eight major catechin compounds including catechin, epicatechin, gallocatechin, epigallocatechin, catechin gallate, epicatechin gallate, gallocatechin gallate, and epigallocatechin gallate. Of those, epigallocatechin gallate, which accounts for about 50% of catechin compounds in green tea, is considered to have a high physiological activity compared with the other catechin compounds.

However, in general, a rate of absorption of the catechin compounds which are polyphenol compounds is low. In particular, a rate of absorption of epigallocatechin gallate is very low, and hence only a small percentage of epigallocatechin gallate ingested is absorbed into the body (Chen L et al. (1997) Drug Metab Dispos 25:1045-1050; Zhu M et al. (2000) Planta Med 66:444-447 for research results in rats) (Warden BA et al. (2001) J Nutr 131:1731-1737; Chow et al. (2001) Cancer Epidemiol Biomarkers Prev 10:53-58; Vaidyanathan and Walle (2001) Pharm Res (NY) 18:1420-1425 for research results in humans).

Therefore, an object of the present invention is to provide for improving absorbability of an epigallocatechin gallate from an extract from the leaves of a green tea cultivar Yabukita.

Solution to Problem

In order to achieve the object, the inventors of the present invention have searched foods or food-related ingredients which can enhance the efficiency of EGCG absorption. As a result, the inventors have found that some of the foods or food-related ingredients have effects of significantly promoting EGCG absorption, thus completing the present invention.

In one aspect as defined in the claims, the present invention provides the non-therapeutic use of an agent as an absorption promoter for an epigallocatechin gallate from an extract from the leaves of a green tea cultivar Yabukita., wherein the agent comprises a *Camellia sinensis cultivar Benifuuki* extract, optionally in combination with other active ingredients.

In another aspect as defined in the claims, the present invention provides an agent for use to promote absorption of an epigallocatechin gallate from an extract from the leaves of a green tea cultivar Yabukita. in a method of medical treatment, wherein the agent comprises a *Camellia sinensis cultivar Benifuuki* extract, optionally in combination with other active ingredients.

The present disclosure also provides production methods for a food or drink, or for a food or drink ingredients, containing a catechin compound.

The present disclosure also provides a food or drink, comprising a *Camellia sinensis cultivar Benifuuki* extract and another tea extract.

Effects of Invention

According to the present invention, it is possible to significantly improve the rate of absorption of an epigallocatechin gallate from an extract from the leaves of a green tea cultivar Yabukita by ingesting a Camellia sinensis cultivar Benifuuki extract.

Therefore, even in the case of ingestion in a small amount, an effect equal to or higher than a conventional one can be obtained. Further, because the rate of absorption is increased, the blending amount in a food and beverage required for raising to an effective concentration in blood can be made smaller than ever before. Therefore, it is possible to provide a food and drink which exhibits no bitter taste and harsh taste unique to a polyphenol compound, e.g., a catechin compound or has reduced bitter taste and harsh taste, and hence is easy to ingest. Further, the amount required as a raw material can be reduced, and hence this method is cost-efficient.

The foods or food-related ingredients each independently have an EGCG absorption promoting effect, but when the foods or food-related ingredients are used in combination of two or more thereof, larger absorption promoting effects can be obtained. For example, the *Camellia sinensis* cultivar Benifuuki extract has the absorption promoting effect when used singly, but in particular, in the case where an extract from the leaves of green tea cultivar Yabukita extract is ingested as a source of the epigallocatechin gallate, it is possible to significantly improve the rate of absorption of the epigallocatechin gallate from the extract by negating an absorption inhibitory effect due to the extract itself.

Brief Description of Drawings

[FIG. 1] A graph showing time-course changes in EGCG concentrations transferred to the serosal side when an HBSS solution added to the chorionic side of Caco-2 cells contains an EGCG reagent at concentrations of 47.7 μM, 184.9 μM, 492.0 μM, and 954.6 μM, respectively.

[FIG. 2] A graph showing time-course changes in EGCG concentrations transferred to the serosal side when an HBSS solution added to the chorionic side of Caco-2 cells contains EGCG derived from a green tea extract at concentrations of 38.9 μM, 169.5 μM, 430.2 μM, and 826.7 μM, respectively.

[FIG. 3] A graph showing relationships between EGCG concentrations added to the chorionic side of Caco-2 cells and rates of EGCG absorption.

[FIG. 4] A graph showing time-course changes in TEER when an EGCG reagent is added at different concentrations to the chorionic side of Caco-2 cells (TEER at 0 hours after the beginning of an absorption experiment is defined as 100%).

[FIG. 5] A graph showing time-course changes in EGCG concentrations in rat plasma after single-dose administration of green tea extract solutions (EGCG concentration: 1 mM) (mean±SEM; no additive group (i): n=8, addition group (ii): n=3, addition group (iii): n=2, addition group (iv): n=3).

[FIG. 6] A graph showing time-course changes in EGCG concentrations in rat plasma after single-dose administration of green tea extract solutions (EGCG concentration: 1 mM) ×time (areas under curve) (mean±SEM; no additive group (i): n=8, addition group (ii): n=3, addition group (iii): n=2, addition group (iv): n=3).

[FIG. 7] A graph showing time-course changes in EGCG concentrations in rat plasma after single-dose administration of the *Camellia sinensis* cultivar Benifuuki extract solutions (EGCG concentration: 1 mM) (mean±SEM; (i) no additive group: n=6, (ii) 40 mM serine+80 mM malic acid-added group: n=2).

[FIG. 8] A graph showing time-course changes in EGCG concentrations in rat plasma after single-dose administration of the *Camellia sinensis* cultivar Benifuuki extract solutions (EGCG concentration: 1 mM)×time (areas under curve) (mean±SEM; (i) no additive group: n=6, (ii) 40 mM serine+80 mM malic acid-added group: n=2).

[FIG. 9] A graph showing time-course changes in EGCG concentrations in rat plasma after single-dose administration of 1 mM EGCG reagent solutions (mean±SEM; (i) no additive group: n=5, (ii) 20 mM serine+40 mM malic acid-added group: n=3).

[FIG. 10] A graph showing time-course changes in EGCG concentrations in rat plasma after single-dose administration of 1 mM EGCG reagent solutionsxtime (areas under curve) (mean±SEM; (i) no additive group: n=5, (ii) 20 mM serine+40 mM malic acid-added group: n=3).

[FIG. 11] A graph showing time-course changes in EGCG concentrations in rat plasma after single-dose administration of *Camellia sinensis* cultivar Benifuuki extract solutions (EGCG concentration: 1 mM) or green tea extract solutions (EGCG concentration: 1 mM).

[FIG. 12] A graph showing time-course changes in EGCG concentrations in rat plasma after single-dose administration of *Camellia sinensis* cultivar Benifuuki extract solutions (EGCG concentration: 1 mM) or green tea extract solutions (EGCG concentration: 1 mM)×time (areas under curve).

[FIG. 13] A graph showing time-course changes in EGCG concentrations in rat plasma after single-dose administration of each of administration solutions containing EGCG (EGCG concentration: 1 mM).

[FIG. 14] A graph showing time-course changes in EGCG concentrations in rat plasma after single-dose administration of each of administration solutions containing EGCG (EGCG concentration: 1 mM)×time (areas under curve).

[FIG. 15] A graph showing time-course changes in total concentrations of catechins (five kinds of catechin compounds) in human plasma after single-dose administration of administration solutions each containing 195 mg of catechin compounds (total amount of nine kinds of catechin compounds).

[FIG. 16] A graph showing time-course changes in total concentrations of catechins (five kinds of catechin compounds) in human plasma after single-dose administration of administration solutions each containing 195 mg of catechin compounds (total amount of nine kinds of catechin compounds)×time (areas under curve).

[FIG. 17] A graph showing time-course changes in total concentrations of catechins (five kinds of catechin compounds) in human plasma after single-dose administration of administration solutions each containing 180 mg of catechin compounds (total amount of nine kinds of catechin compounds)×time (areas under curve).

## Description of Embodiments

Hereinafter, the present invention is described in more detail by way of preferred embodiments.

In an absorption promoter for a catechin compound of the present disclosure, serine serving as an active ingredient for the absorption promotion is one kind of non-essential amino acid and is important as a raw material for phosphatidylserine which is a component of cell membranes. In most cases, serine is present in a form of a protein in foods and is a nutrient contained in many foods. L-serine has been approved as an existing additive and is widely used as a seasoning or a nutrition reinforcement. Meanwhile, a salt of serine is exemplified by, but not limited to, serine hydrochloride, serine sulfate, and serine phosphate.

In the absorption promoter for a catechin compound of the present disclosure, aspartic acid serving an active ingredient for the absorption promotion is one kind of non-essential amino acid and is classified into acidic amino acids. Aspartic acid is contained in various foods, and L-aspartic acid has been approved as an existing additive and is used as a seasoning or a nutrition reinforcement. Meanwhile, a salt of aspartic acid is exemplified by, but not limited to, sodium aspartate, potassium aspartate, magnesium aspartate, and calcium aspartate. Of those, a sodium salt of L-aspartic acid has been approved as a specified additive and is used as a seasoning or a nutrition reinforcement.

In the absorption promoter for a catechin compound of the present disclosure, malic acid serving an active ingredient for the absorption promotion is one kind of organic compound classified into hydroxy acids and is an ingredient contained in apple or the like. Meanwhile, a salt of malic acid is exemplified by, but not limited to, sodium malate, potassium malate, magnesium malate, and calcium malate. Of those, DL-malic acid and sodium DL-malate have been approved as specified additives and are widely used as food additives serving as acidulants or pH adjusters. The acceptable daily intake (ADI) has not been set, and malic acid has been recognized as a very highly safe ingredient.

In the absorption promoter for a catechin compound of the present disclosure, a grapefruit which is a raw material for grapefruit juice serving as an active ingredient for the absorption promotion is a citrus fruit which is eaten as it is and used for juices, cocktails, sours, and the like and has been eaten by many people.

In the absorption promoter for a catechin compound of the present disclosure, capric acid and lauric acid serving as active ingredients for the absorption promotion are saturated fatty acids having 10 carbon atoms and having 12 carbon atoms, respectively, and are contained in coconut oil or palm oil at high concentrations. Meanwhile, a salt of capric acid or lauric acid is exemplified by, but not limited to, sodium, potassium, magnesium, and calcium salts thereof. In addition, an ester of capric acid or lauric acid is exemplified by, but not limited to, esters such as a methyl ester, an ethyl ester, a glycol ester, a glycerin ester, and a sucrose ester. Of those, ethyl caprylate (also known as ethyl decanoate) has been approved as a specified additive.

In the absorption promoter for an epigallocatechin gallate from an extract from the leaves of a green tea cultivar Yabukita of the present invention, a *Camellia sinensis* cultivar Benifuuki extract serving an active ingredient for the absorption promotion is a product obtained from tea leaves of *Camellia sinensis* cultivar Benifuuki which is one cultivar of tea (for example, cultivar identification number of the Ministry of Agriculture, Forestry and Fisheries of Japan: No. 4591). As a raw material, for example, a product formed into usual green tea may be used. The extract may be prepared by extraction of tea leaves of *Camellia sinensis* cultivar Benifuuki with a solvent such as water or hot water. There is given, for example, a method involving adding 5 to 100 parts by mass of the solvent with respect to 1 part by mass of the tea leaves of *Camellia sinensis* cultivar Benifuuki, and performing extraction at room temperature to about 100°C for about 1 to 120 minutes. It should be noted that, in the present invention, the "*Camellia sinensis* cultivar Benifuuki extract" is a concept including a state in which an active ingredient which promotes absorption of an epigallocatechin gallate from an extract from the leaves of a green tea cultivar Yabukita. Instead of the extract obtained by extraction with the solvent, dry powder of the tea leaves may be ingested, or the extract may be used by being added to or blended in a raw material for a food and drink or a raw material for a food and drink ingredient containing an epigallocatechin gallate from an extract from the leaves of a green tea cultivar Yabukita.

In the present invention, when the above-mentioned active ingredients are ingested singly or in combination in oral ingestion of an epigallocatechin gallate from an extract from the leaves of a green tea cultivar Yabukita, absorption of the epigallocatechin gallate compound into the body can be promoted.

The present invention is preferably used for promotion of absorption of the epigallocatechin gallate from an extract of the leaves of a green tea cultivar Yabukita into the body

Preferred ingestion amounts per day of the above-mentioned active ingredients for exhibiting the effectiveness of the absorption promoter for a catechin compound of the present disclosure, approximately calculated based on the results of test examples to be described later, are as follows: in the case of serine, preferably 0.05 to 110 mg/1 kg of body weight, more preferably 10 to 90 mg/1 kg of body weight, still more preferably 10 to 25 mg/1 kg of body weight; in the case of aspartic acid, preferably 0.05 to 130 mg/1 kg of body weight, more preferably 10 to 110 mg/1 kg of body weight, still more preferably 10 to 30 mg/1 kg of body weight; in the case of malic acid, preferably 0.05 to 260 mg/1 kg of body weight, more preferably 10 to 220 mg/1 kg of body weight, still more preferably 10 to 60 mg/1 kg of body weight; in the case of capric acid, preferably 0.004 to 25 mg/1 kg of body weight, more preferably 1 to 20 mg/1 kg of body weight, still more preferably 1 to 10 mg/1 kg of body weight; in the case of lauric acid, preferably 0.01 to 25 mg/1 kg of body weight, more preferably 2 to 20 mg/1 kg of body weight, still more preferably 2 to 6 mg/1 kg of body weight; in the case of the grapefruit juice, preferably 5 to 10,000 mg/1 kg of body weight, more preferably 1,000 to 8,000 mg/1 kg of body weight, still more preferably 1,000 to 2,000 mg/1 kg of body weight in terms of a solid content; and in the case of the *Camellia sinensis* cultivar Benifuuki extract, preferably 1 to 100 mg/1 kg of body weight, more preferably 10 to 50 mg/1 kg of body weight, still more preferably 20 to 40 mg/1 kg of body weight in terms of a solid content.

Further, mass ratios for effectively enhancing absorption of the catechin compound are as follows: in the case of serine, preferably 0.01 to 30 mg, more preferably 2 to 20 mg, still more preferably 2 to 5 mg per mg of the catechin compound; in the case of aspartic acid, preferably 0.01 to 40 mg, more preferably 2 to 30 mg, still more preferably 2 to 6 mg per mg of the catechin compound; in the case of malic acid, preferably 0.01 to 70 mg, more preferably 2 to 50 mg, still more preferably 2 to 15 mg per mg of the catechin compound; in the case of capric acid, preferably 0.001 to 6 mg, more preferably 0.2 to 4 mg, still more preferably 0.2 to 3 mg per mg of the catechin compound; in the case of lauric acid, preferably 0.002 to 7 mg, more preferably 0.4 to 5 mg, still more preferably 0.4 to 2 mg per mg of the catechin compound; in the case of the grapefruit juice, in terms of a solid content, preferably 1 to 2,600 mg, more preferably 200 to 1,800 mg, still more preferably 200 to 500 mg per mg of the catechin compound; and in the case of the *Camellia sinensis* cultivar Benifuuki extract, in terms of a solid content, preferably 0.1 to 50 mg, more preferably 1 to 10 mg, still more preferably 2 to 5 mg per mg of the catechin compound.

In the absorption promoter for a catechin compound of the present disclosure, the contents of the active ingredients with respect to the total amount are as follows: in the case of serine, the content is preferably 1.0 to 100 mass%, more preferably 4.5 to 100 mass% in terms of a solid content; in the case of aspartic acid, the content is preferably 1.0 to 100 mass%, more preferably 4.5 to 100 mass% in terms of a solid content; in the case of malic acid, the content is preferably 1.5 to 100 mass%, more preferably 4.5 to 100 mass% in terms of a solid content; in the case of capric acid, the content is preferably 1.5 to 100 mass%, more preferably 4.5 to 100 mass% in terms of a solid content; in the case of lauric acid, the content is preferably 1.0 to 100 mass%, more preferably 4.5 to 100 mass% in terms of a solid content; in the case of the grapefruit juice, the content is preferably 1.5 to 100 mass%, more preferably 4.5 to 100 mass% in terms of a solid content; and in the case of the *Camellia sinensis* cultivar Benifuuki extract, the content is preferably 0.1 to 100 mass% in terms of a solid content. When the contents are less than the lower limits, in order to obtain sufficient effects, it is necessary to increase the amounts of the ingredients added to a food and drink or to increase the ingestion amounts.

In the case where the *Camellia sinensis* cultivar Benifuuki extract is used as an active ingredient of the absorption promoter for an epigallocatechin gallate from an extract from the leaves of a green tea cultivar Yabukita of the present invention, the extract can be particularly suitably used in ingestion of an extract of the leaves of a green tea cultivar Yabukita. That is, as shown in examples to be described later, it is possible to significantly improve the rate of absorption of the catechin compound from the tea extract by negating an absorption inhibitory effect due to the tea extract itself.

The raw material for the extract of the leaves of a green tea cultivar Yabukita is preferably tea leaves of a green tea cultivar Yabukita. The extract is preferably prepared from the tea leaves. Preparation of the extract is not particularly limited, and can be performed by extraction of tea leaves with a solvent such as water or hot water. There is given, for example, a method involving adding 5 to 100 parts by mass of the solvent with respect to 1 part by mass of the tea leaves, and performing extraction at a temperature of room temperature to about 100°C for about 1 to 120 minutes. It should be noted that, in the present invention, the "tea extract" is a concept including a state included in tea leaves. Instead of the extract obtained by extraction with the solvent, dry powder of the tea leaves may be used.

The absorption promoter for a catechin compound of the present disclosure may contain carbohydrates, dietary fibers, proteins, vitamins, and the like in addition to the above-mentioned fundamental ingredients.

The absorption promoter for a catechin compound of the present disclosure is used in various fields of medicines, health foods, processed foods, and the like, and can be used as an active ingredient of a drug or a food raw material, for example.

For example, in the case where the absorption promoter is used as a medicine, the absorption promoter may be formulated together with a pharmaceutically acceptable base or carrier to provide a pharmaceutical composition. In the pharmaceutical composition, not only the base or carrier but also an additive such as a binder, a disintegrant, a buffer, a preservative, a moisturizer, an antimicrobial agent, an antiseptic, a fragrance, a pigment, a surfactant, a stabilizer, or a solubilizing agent may be optionally blended as long as it is pharmaceutically acceptable. A form of the pharmaceutical composition is exemplified by dosage forms of a pill, a powder, a tablet, a granule, a capsule, a syrup, a liquid, a jelly, and a pastille.

Further, in the case where the absorption promoter for a catechin compound of the present disclosure is added to a food and drink before ingestion, the absorption promoter may be used by being blended in a general food, a food for specified health use, a dietary supplement, a functional food, and the like. Examples of the foods include: confectionery such as chocolates, biscuits, gums, candies, cookies, gummi candies, and tablet confectionery; cereals; drinks such as powder drinks, soft drinks, milk drinks, nutritional drinks, and carbonated drinks; and chilled sweets such as ice creams and sherbets. In addition, in the cases of the food for specified health use, dietary supplement, and the like, forms such as a powder, a granule, a capsule, a syrup, a tablet, and a sugar-coated tablet may be employed.

Further, as shown in examples to be described later, the *Camellia sinensis* cultivar Benifuuki extract has an effect of significantly improving the rate of absorption of an epigallocatechin gallate from an extract from the leaves of a green tea cultivar Yabukita by negating an absorption inhibitory effect due to the tea extract itself. Therefore, in the embodiment in which the absorption promoter for an epigallocatechin gallate from an extract from the leaves of a green tea cultivar Yabukita of the present invention is added to a food and drink before ingestion, a food and drink containing the *Camellia sinensis* cultivar Benifuuki extract and an extract from the leaves of a green tea cultivar Yabukita is preferably used.

The present disclosure also provides a production method for a food and drink or a food and drink ingredient containing a catechin compound, the method including the step of adding at least one kind selected from the group consisting of serine or a salt thereof, aspartic acid or a salt thereof, malic acid or a salt thereof, capric acid, a salt thereof, or an ester thereof, lauric acid, a salt thereof, or an ester thereof, grapefruit juice, and a *Camellia sinensis* cultivar Benifuuki extract to a raw material for a food and drink or a raw material for a food and drink ingredient containing a catechin compound.

The production method can be performed by adding, as a raw material or a blending ingredient, at least one kind selected from the group consisting of serine or a salt thereof, aspartic acid or a salt thereof, malic acid or a salt thereof, capric acid, a salt thereof, or an ester thereof, lauric acid, a salt thereof, or an ester thereof, grapefruit juice, and a *Camellia sinensis* cultivar Benifuuki extract, which are ingredients for promoting absorption of the catechin compound, to a raw material for a food and drink or a raw material for a food and drink ingredient containing a catechin compound in accordance with a known method suitable for the food and drink or the food and drink ingredient or a method based on the known method, and by appropriately performing an additional step, if necessary.

In addition, the present disclosure also provides a production method for a food and drink or a food and drink ingredient containing a catechin compound, the method including the step of adding a catechin compound to a raw material for a food and drink or a raw material for a food and drink ingredient containing at least one kind selected from the group consisting of serine or a salt thereof, aspartic acid or a salt thereof, malic acid or a salt thereof, capric acid, a salt thereof, or an ester thereof, lauric acid, a salt thereof, or an ester thereof, grapefruit juice, and a *Camellia sinensis* cultivar Benifuuki extract.

The production method can be performed by adding, as a raw material or a blending ingredient, a catechin compound to a raw material for a food and drink or a raw material for a food and drink ingredient containing at least one kind selected from the group consisting of serine or a salt thereof, aspartic acid or a salt thereof, malic acid or a salt thereof, capric acid, a salt thereof, or an ester thereof, lauric acid, a salt thereof, or an ester thereof, grapefruit juice, and a *Camellia sinensis* cultivar Benifuuki extract, which are ingredients for promoting absorption of the catechin compound, in accordance with a known method suitable for the food and drink or the food and drink ingredient or a method based on the known method, and by appropriately performing an additional step, if necessary.

Further, as shown in examples to be described later, the *Camellia sinensis* cultivar Benifuuki extract has an effect of significantly improving the rate of absorption of the catechin compound from the tea extract by negating an absorption inhibitory effect due to the tea extract itself. Therefore, in the case where the *Camellia sinensis* cultivar Benifuuki extract is used in the production method for a food and drink or a food and drink ingredient containing a catechin compound of the present disclosure, the raw material for a food and drink or the raw material for a food and drink ingredient containing a catechin compound to which the *Camellia sinensis* cultivar Benifuuki extract is added is preferably the tea extract, or the tea extract is preferably added to the raw material for a food and drink or the raw material for a food and drink ingredient containing the *Camellia sinensis* cultivar Benifuuki extract. As the tea extract, a green tea extract is preferably used.

## Examples

Hereinafter, the present invention is described specifically by way of examples, but the scope of the present invention is not limited by the examples.

### <Test Example 1> (Establishment of *in vitro* EGCG absorption measurement system)

An orally-ingested polyphenol compound, in particular, catechin compound is considered to be absorbed mainly in the intestinal tract, especially the small intestine in the body. Therefore, in order to easily screen a food or a food-related ingredient which promotes small intestinal absorption of the catechin compound, especially EGCG, from a wide range of targets, the inventors of the present invention have established an *in vitro* EGCG absorption measurement system with a small intestinal epithelial model using a Caco-2 cell line derived from human colon cancer (American Type Culture Collection). Specific methods and the results are shown below.

Caco-2 cells are known to spontaneously differentiate while the cells are cultured for about 3 weeks and to exhibit many small intestinal epithelium-like features. The Caco-2 cells were cultured in the presence of humidified air containing 5% $CO_2$ in a Dulbecco's modified Eagle medium (DMEM, pH 7.4; manufactured by GIBCO) containing 10% inactivated fetal bovine serum (manufactured by HyClone), 50 U/mL penicillin-50 $\mu$g/mL streptomycin (manufactured by GIBCO), and a 1% non-essential amino acid (manufactured by GIBCO) in a plastic flask of 75 $cm^2$. The cells were maintained by performing subculture every 5 to 8 days when the cells reached 80 to 90% confluence. An EGCG absorption experiment to be described below was performed using Caco-2 cells which had been subcultured 30 to 70 times.

The EGCG absorption experiment was performed using a Caco-2 cell monolayer cultured on a Transwell with a diameter of 12 mm (polycarbonate filter culture area: 1.13 $cm^2$, pore size: 0.4 $\mu$m; manufactured by Corning). The Caco-2 cells were inoculated onto an insert of the Transwell at a density of $1.0 \times 10^5$ cells/$cm^2$, and culture was continued while the medium was exchanged for a fresh one every 2 days. Transepithelial electrical resistance (hereinafter, referred to as "TEER") was measured using a Millicell ERS meter (manufactured by Millipore) to monitor the degree of completion of a tight junction of the cell monolayer, and a monolayer which had been confirmed that formation of the tight junction had been completed was used in the experiment. Mean values of TEER reached 500 to 1,000 $\Omega cm^2$ 4 weeks after inoculation and were maintained stably until 7 weeks after inoculation. The Caco-2 cell monolayer used in the absorption experiment was one obtained 4 to 6 weeks after inoculation.

The medium of the upper part of the Transwell insert on which the Caco-2 cell monolayer was placed (chorionic side) was replaced by a Hanks' Balanced Salt Solution-like Transport Medium having a pH of 5.5 (chorionic side HBSS solution; containing 10 mM MES, 5 mM glucose, 10 mM glutamine, and 1 mM ascorbic acid), and the medium of the lower part of the insert (serosal side) was replaced by HBSS having a pH of 7.4 (serosal side HBSS solution; containing 10 mM HEPES, 5 mM glucose, 10 mM glutamine, and 1 mM ascorbic acid). The cells were washed twice, and 0.5 mL and 1.5 mL of the respective fresh HBSS solutions were then added to the chorionic side and the serosal side, respectively, followed by incubation in the presence of 5% $CO_2$ at 37°C for 30 minutes. After a lapse of 30 minutes, TEER was measured, and the solutions of the upper and lower parts were then replaced again by the fresh HBSS solutions. The cells were incubated for 30 minutes, and TEER was measured again. That time was defined as 0 hours after the beginning of absorption.

EGCG is easily oxidized and unstable in a neutral to alkaline aqueous solution, but EGCG was maintained completely and stably during the absorption experiment period by adding 1 mM ascorbic acid to the HBSS solution of the chorionic side and maintaining the pH at 5.5. In addition, the EGCG absorption capacity of the Caco-2 cells was maintained constantly for 4 hours or more by adding 10 mM glutamine to the HBSS solutions of the chorionic side and serosal side in the measurement system.

After measurement of TEER at 0 hours after the beginning of absorption, the solutions of the upper and lower parts of the insert were replaced by fresh HBSS solutions. In this procedure, EGCG (epigallocatechin gallate, Cat. No. E4143; manufactured by Sigma) was added to the HBSS solution of the chorionic side of the Caco-2 cell monolayer so that the EGCG final concentrations were 47.7 μM, 184.9 μM, 492.0 μM, and 954.6 μM, or a green tea extract (green tea hot water extract, No. 16714; manufactured by San-Ei Gen F.F.I., Inc.) was added thereto so that the EGCG final concentrations were 38.9 μM, 169.5 μM, 430.2 μM, and 826.7 μM. The cells were incubated in the presence of 5% $CO_2$ at 37°C for 1 hour, and TEER was measured. Then, the insert was transferred to wells including a fresh HBSS solution of the serosal side without replacing the HBSS solution of the chorionic side on the insert, and the cells were incubated for an additional 2 hours. After a lapse of 2 hours, TEER was measured, and the EGCG concentrations contained in the HBSS solutions of the serosal side, obtained 0, 1, and 3 hours after the beginning of absorption, were measured by high-performance liquid chromatography (HPLC) as described below.

Measurement of the EGCG concentrations contained in the HBSS solutions of the serosal side was performed by measuring peak areas of elution patterns of an absorbance at 280 nm using an HPLC apparatus (CBM-20A or SCL-10Avp; manufactured by Shimadzu Corporation) equipped with a reversed-phase column with a size of 150 mm×4.6 mm (particle size: 5 μm) (Mightysil RP-18 GP; manufactured by Kanto Chemical Co., Inc.). Measurement was performed at a column temperature of 40°C. Elution of EGCG from the column was performed by a linear gradient method using Solution A and Solution B (Solution A: water/acetonitrile/phosphoric acid=700/10/1; Solution B: solution A/methanol=2/1) at a flow rate of 0.5 mL/min. First, 400 μL of the HBSS solution of the serosal side were injected into the column, and 100% Solution A was passed through the column for 12 minutes from 0 minutes to 12 minutes, and the concentration of Solution B was increased from 0 to 80% for 43 minutes until 55 minutes. 80% Solution B was passed through the column until 60 minutes, and the concentration of Solution A was raised to 100% again for 5 minutes until 65 minutes, followed by completion of the analysis of 75 minutes per cycle. The EGCG concentrations in the samples were determined using a standard line prepared from peak areas of an EGCG standard substance having known concentrations. In the case of the standard substance, the retention time of EGCG was 53 minutes, and the detection sensitivity was 10 nM.

FIG. 1 shows the results of the case where the EGCG reagent solution was added to the chorionic side of the Caco-2 cells, and FIG. 2 shows the results of the case where the green tea extract solution was added to the chorionic side of the Caco-2 cells. As clear from FIG. 1 and FIG. 2, in the cases of all the EGCG concentrations, the EGCG concentrations absorbed to the serosal side were found to increase in almost direct proportion to the incubation time. In addition, as shown in FIG. 3, when the rate of EGCG absorption shown as a permeation amount per unit time and unit area was plotted against the EGCG concentrations added to the chorionic side, it was found that the rate increased in almost direct proportion to the EGCG concentrations added to the chorionic side. Meanwhile, FIG. 4 shows time-course changes in TEER when the EGCG reagent was added at different concentrations. The TEER tended to slightly decrease with time, but the TEER at the beginning of measurement was maintained well during the 3-hour measurement period.

The results show that EGCG absorption from the EGCG reagent and green tea can be measured easily by using the Caco-2 cell monolayer as a small intestinal absorption model. In other words, an *in vitro* experiment system capable of maintaining EGCG stably and measuring EGCG absorption easily under conditions similar to those in living bodies was established.

<Test Example 2> (Screening of food or food-related ingredient which promotes EGCG absorption by Caco-2 cells)

The rates of EGCG absorption in the cases where various foods or food-related ingredients shown in Table 1 below were added to the chorionic side in the EGCG absorption measurement system of Test Example 1 above were calculated as apparent permeability coefficients (Papp), and compared with the result in the case of no additive.

[Table 1]

| Foods or food-related ingredients screened by in *vitro* measurement system based on EGCG absorption | | | | | |
|---|---|---|---|---|---|
| Saccharides (11) | Fructose | Amino acids (16) | Theanine | Polyphenols (7) | Quercetin |
| | Sucrose | | GABA | (including tea catechins (4)) | Rutin |
| | Galactose | | Arginine | | Hesperidin |
| | Stachyose | | Serine | | Epicatechin (EC) |
| | Isomaltooligosaccharide | | Proline | | Epicatechin gallate (ECG) |
| | Raffinose | | Methionine | | Epigallocatechin (EGC) |
| | Glucose | | Alanine | | Methylated catechin (EGCG-3"Me) |
| | Fructooligosaccharide | | Valine | | |
| | Xylitol | | Leucine | Organic acids (8) | Malic acid |
| | Erythritol | | Phenylalanine | | Citric acid |
| | Glucosamine | | Lysine | | Quinic acid |
| | | | Glycine | | Tartaric acid |
| Dietary fibers (9) | Guar gum | | Threonine | | Nicotinic acid |
| | Pine fiber | | Glutamic acid | | Sodium caprylate |
| | Locust bean gum | | Aspartic acid | | Sodium laurate |
| | Xanthan gum | | Histidine | | Phytic acid |
| | Carrageenan | | | | |
| | Agar | | | Others (10) | Caffeine |
| | Glucomannan | | | | Saponin |
| | Gellan gum | | | | Thiamine |
| | Inulin | | | | Pectin |
| | | | | | Lecithin |
| | | | | | Theophylline |
| | | | | | Riboflavin |
| | | | | | Carnitine |
| | | | | | *Momordica charantia* extract |

(continued)

| Foods or food-related ingredients screened by in *vitro* measurement system based on EGCG absorption | | | | | |
|---|---|---|---|---|---|
| Saccharides (11) | Fructose | Amino acids (16) | Theanine | Polyphenols (7) | Quercetin |
| | | | | | Grapefruit juice |

Specifically, each of the ingredients shown in Table 1 above was added at different concentrations (2 or 3 concentrations) together with EGCG to the chorionic side of the Caco-2 cells at the time of 0 hours after the beginning of absorption, and the amount (mol) of EGCG which had permeated to the serosal side after a lapse of a certain period of time was measured by HPLC. EGCG permeation amounts, Q (mol), were plotted against time, t (sec), to calculate dQ/dt from the slope, and Papp (cm/sec) was determined by the following equation (1) from a cell surface area, A ($cm^2$), and a concentration of the ingredient added to the chorionic side, $C_0$ (M) .
[Math. 1]

$$Papp=(dQ/dt)/(A\cdot C_0)\cdots(1)$$

The Papp value in the case where no food or food-related ingredient was added was defined as 1, and relative values of Papp in the cases where the respective foods or food-related ingredients were added were calculated. Of those, cases where significantly high Papp values were observed are shown in Table 2.
[Table 2]

| Relative rates of EGCG absorption when various foods or food-related ingredients were added to Caco-2 cells at various concentrations together with 1 mM EGCG solution | | | |
|---|---|---|---|
| Food or food-related ingredient added | Addition concentration | Relative value of Papp based on that of no additive | Addition amount (parts by mass) of food or food-related ingredient based on 100 parts by mass of tea catechin |
| No additive | | 1 | |
| Capric acid (M.W.: 172.26) | 1 mM | 1.9 | 38 |
| | 3 mM | 2.1 | 113 |
| | 6 mM | 2.3 | 225 |
| Lauric acid (M.W.: 200.32) | 0.5 mM | 1 | 22 |
| | 1 mM | 1.4 | 44 |
| | 3 mM | 4.3 | 131 |
| Grapefruit juice (100%) | 10% | 1.3 | 21,816 |
| | 20% | 2.7 | 43,633 |
| Serine (M.W.: 105.09) | 5 mM | 1 | 115 |
| | 20 mM | 3.2 | 459 |
| Aspartic acid (M.W.: 133.10) | 10 mM | 1.1 | 290 |
| | 20 mM | 3.2 | 581 |
| Malic acid (M.W.: 134.09) | 20 mM | 1.6 | 585 |
| | 40 mM | 2.6 | 1,170 |
| EGCG: M.W.: 458.37 | | | |

As shown in Table 2, six ingredients including serine, aspartic acid, malic acid, capric acid, lauric acid, and grapefruit juice each independently promoted EGCG absorption.

<Test Example 3> (EGCG absorption promoting effect by combination of foods or food-related ingredients)

Of the six kinds of foods or food-related ingredients, which had been found to have EGCG absorption promoting effects, the five kinds ingredients including serine, aspartic acid, malic acid, grapefruit juice, lauric acid, except for capric acid belonging to the same medium chain fatty acid as lauric acid, were used to examine synergistic or additive EGCG absorption promoting effects in the combinations of two kinds thereof. Specifically, in the same manner as in Test Example 2, two kinds of foods or food-related ingredients were added in combination simultaneously with 1 mM EGCG to the chorionic side of the Caco-2 cells, and rates of EGCG absorption to the serosal side were measured and compared with the result of the case of no additive. Table 3 shows the results.

[Table 3]

| Relative rates of EGCG absorption when various foods or food-related ingredients were added to Caco-2 cells at various concentrations together with 1 mM EGCG solution | |
|---|---|
| Combinations and concentrations of foods or food-related ingredients added | Relative value of Papp based on that of no additive |
| No additive | 1.0 |
| 20 mM serine+20 mM aspartic acid | 5.3 |
| 20 mM serine+40 mM malic acid | 5.4 |
| 20 mM serine+20% grapefruit juice | 6.8 |
| 20 mM serine+3 mM lauric acid | 2.3 |
| 20 mM aspartic acid+40 mM malic acid | 3.9 |
| 20 mM aspartic acid+20% grapefruit juice | 5.2 |
| 20 mM aspartic acid+3 mM lauric acid | 4.7 |
| 40 mM malic acid+20% grapefruit juice | 3.7 |
| 40 mM malic acid+3 mM lauric acid | 2.1 |
| 3 mM lauric acid+20% grapefruit juice | 11.6 |

As shown in Table 3, additive EGCG absorption promoting effects were obtained in the combinations of serine+aspartic acid, serine+malic acid, serine+grapefruit juice, aspartic acid+malic acid, aspartic acid+grapefruit juice, aspartic acid+lauric acid, and malic acid+grapefruit juice. Further, the EGCG absorption promoting effect in the combination of grapefruit juice+lauric acid was synergistic.

Further, in this case, TEER serving as an indicator of the degree of opening and closing of an intercellular tight junction was inversely correlated with the rate of EGCG absorption calculated as the apparent permeability coefficient (Papp) of EGCG. Therefore, the intracellular pathway of the Caco-2 cells was opened by the functions of serine, aspartic acid, malic acid, grapefruit juice, lauric acid, capric acid, and the like, and EGCG was probably transferred to the serosal side through the pathway. Further, in the case where EGCG is absorbed via cells, EGCG may be conjugated with sulfuric acid or glucuronic acid. Therefore, the deconjugation treatment of EGCG which had permeated to the serosal side was attempted, but there was no EGCG absorbed in the form of a conjugate. This suggests that most of EGCG is absorbed in the form of a free body in the Caco-2 cells, and that EGCG may be absorbed via the intracellular pathway.

<Test Example 4> (EGCG absorption promoting effects of foods or food-related ingredients in rats)

This experiment was performed for examining whether the foods or food-related ingredients which exhibited EGCG absorption promoting effects in the measurement system using the Caco-2 cells had the same EGCG absorption promoting effects even when orally ingested by an animal. Specifically, four kinds of administration solutions were prepared by adding serine and malic acid to a green tea hot water extract (manufactured by San-Ei Gen F.F.I., Inc., hereinafter, referred to as "green tea extract") so that the final concentrations of serine and malic acid in the green tea extraction solution were (i) no additive, (ii) 20 mM serine+40 mM malic acid, (iii) 40 mM serine+80 mM malic acid, and (iv) 80 mM serine+160 mM malic acid, and the respective administration solutions were orally administered forcibly to rats, and EGCG concentrations in plasma obtained by blood collection performed with time after administration were measured and converted into concentrationxtime values (areas under curve) to compare amounts of EGCG remaining in blood. The final EGCG concentration derived from the green tea extract contained in each administration solution was adjusted to 1 mM.

Rats used in this experiment (Sprague Dawley, male, 8-week-old; purchased from Japan SLC, Inc.) were subjected to indwelling surgery in advance by inserting a cannula from the jugular vein toward the heart so that the opening of the top of the cannula was located in the vicinity of the right atrial inlet, and a 1-week recuperation period was then taken until the start of the experiment. During the recuperation period, the rats were fed individually in cages equipped with floor nets and allowed to ingest CE-2 feed (manufactured by CLEA Japan, Inc.) freely.

To the rats which had fasted for 16 hours from the early-evening on the previous day of the experiment, each of the administration solutions (i) to (iv) was orally administered forcibly at a single dose of 1 mL per 100 g body weight of the rats. Before administration and 0.25, 0.5, 1, 2, 3 hours after administration, heparin blood collection was performed in an amount of 0.5 mL through the cannula from each rat, and immediately after blood collection, plasma was separated and stored at -80°C under an acidic condition until analysis.

The EGCG concentration in plasma was measured as follows: Each plasma before and after deconjugation treatments with β-glucuronidase and sulfatase was extracted with ethyl acetate under an acidic condition and evaporated to dryness; and the residue was dissolved in a solution for a mobile phase of HPLC and subjected to HPLC analysis (electrochemical detection method). Separation of EGCG by HPLC was performed using an HPLC apparatus (SCL-10Avp; manufactured by Shimadzu Corporation) equipped with a reversed-phase column with a size of 2.0 mm×150 mm (particle size: 5 μm) (CAPCELL PAK C18 MGII; manufactured by Shiseido Co., Ltd.) at a column temperature of 40°C. Isocratic elution was performed at a sample injection volume to the column of 20 μL using 0.1% phosphoric acid containing 0.1 mM EDTA·2Na:acetonitrile=90:10 as the mobile phase at a flow rate of 0.4 mL/min. Detection of EGCG was performed using an electrochemical detector (NANOSPACE SI-2; manufactured by Shiseido Co., Ltd.), and a peak area was calculated from an elution pattern of a current value detected at an applied voltage of 600 mV and quantified using a standard line prepared from peak areas of known concentrations of an EGCG standard substance. The retention time of the EGCG standard substance was 8.0 minutes, and the detection sensitivity was 2 nM. The EGCG concentrations in actual administration solutions were also analyzed again, and it was confirmed that EGCG was administered to the rats in scheduled amounts. Rat plasma collected after administration of each of the administration solutions (i), (ii), (iii), and (iv) was treated and subjected to HPLC analysis as mentioned above. The results show that there were no changes in EGCG concentrations in all the solutions (i) to (iv) before and after the deconjugation treatments. In other words, it was considered that most of EGCG in blood was absorbed in blood as an unconjugated free body.

FIG. 5 shows time-course changes in EGCG concentrations in rat plasma until 3 hours after administration of the administration solutions. In addition, FIG. 6 shows time-course changes in EGCG concentrations in plasma×time (areas under curve). The results were statistically analyzed as described below.

First, for the time-course changes in EGCG concentrations in plasma until 3 hours after administration of the administration solutions to the rats, a multiple comparison test (Scheffe's method; level of significance: 5%) was performed by two-way factorial analysis of variance with replication based on factors, i.e., the kinds of the administration solutions and elapsed time after administration.

Table 4 shows the results.

[Table 4]

| Multiple comparison test by Scheffe's method on EGCG concentrations in plasma of rats to which green tea extract solution containing 1 mM EGCG was orally administered forcibly together with serine and malic acid at various concentrations. | | | | |
|---|---|---|---|---|
| | Difference in mean values | Critical value | P value | |
| Green tea extract *vs* Green tea extract+20 mM serine+40 mM malic acid | -0.0152 | 0.0070 | 1.7E-06 | S |
| Green tea extract vs Green tea extract+40 mM serine+80 mM malic acid | -0.0174 | 0.0080 | 1.4E-06 | S |

(continued)

| Multiple comparison test by Scheffe's method on EGCG concentrations in plasma of rats to which green tea extract solution containing 1 mM EGCG was orally administered forcibly together with serine and malic acid at various concentrations. | | | | |
|---|---|---|---|---|
| | Difference in mean values | Critical value | P value | |
| Green tea extract vs Green tea extract+80 mM serine+160 mM malic acid | -0.0175 | 0.0069 | 2.7E-08 | S |
| Green tea extract+20 mM serine+40 mM malic acid *vs* Green tea extract+40 mM serine+80 mM malic acid | -0.0022 | 0.0093 | 0.9227 | |
| Green tea extract+20 mM serine+40 mM malic acid vs Green tea extract+80 mM serine+160 mM malic acid | -0.0023 | 0.0083 | 0.8836 | |
| Green tea extract+40 mM serine+80 mM malic acid *vs* Green tea extract+80 mM serine+160 mM malic acid | -0.0001 | 0.0092 | 1.0000 | |
| "S" described outside the column means that the administration group has a significant difference at a level of significance of 5%. | | | | |

As shown in Table 4, the results of the Scheffe's multiple comparison test suggest that the EGCG concentrations in plasma in the cases where (ii) 20 mM serine+40 mM malic acid, (iii) 40 mM serine+80 mM malic acid, and (iv) 80 mM serine+160 mM malic acid were added to the green tea extract, and the mixture was administered to the rats were significantly high (P<0.05) compared with (i) the case where the green tea extract containing no additive was administered, and that EGCG absorption from the green tea extract was promoted by adding, to the green tea extract, the combination of serine+malic acid at any of concentrations according to the above-mentioned items (ii), (iii), and (iv).

Subsequently, in the same manner as above, a multiple comparison test (Scheffe's method; level of significance: 5%) was performed by two-way factorial analysis of variance with replication based on factors, i.e., the EGCG concentration in plasma until 3 hours after administration of the administration solutions to the rats×time (area under curve) and elapsed time after administration. Table 5 shows the results.

[Table 5]

| Multiple comparison test by Scheffe's method on time-course changes in EGCG concentrations in plasma of rats to which green tea extract containing 1 mM EGCG was orally administered forcibly together with serine and malic acid at various concentrations×time (areas under curve). | | | | |
|---|---|---|---|---|
| | Difference in mean values | Critical value | P value | |
| Green tea extract vs Green tea extract+20 mM serine+40 mM malic acid | -0.01624 | 0.0090 | 5.8E-05 | S |
| Green tea extract *vs* Green tea extract+40 mM serine+80 mM malic acid | -0.02128 | 0.0102 | 3.6E-06 | S |
| Green tea extract vs Green tea extract+80 mM serine+160 mM malic acid | -0.02168 | 0.0088 | 6.4E-08 | S |
| Green tea extract+20 mM serine+40 mM malic acid *vs* Green tea extract+40 mM serine+80 mM malic acid | -0.00504 | 0.0119 | 0.6857 | |

(continued)

| Multiple comparison test by Scheffe's method on time-course changes in EGCG concentrations in plasma of rats to which green tea extract containing 1 mM EGCG was orally administered forcibly together with serine and malic acid at various concentrations×time (areas under curve). | | | | |
|---|---|---|---|---|
| | Difference in mean values | Critical value | P value | |
| Green tea extract+20 mM serine+40 mM malic acid *vs* Green tea extract+80 mM serine+160 mM malic acid | -0.00544 | 0.0107 | 0.5448 | |
| Green tea extract+40 mM serine+80 mM malic acid vs Green tea extract+80 mM serine+160 mM malic acid | -0.0004 | 0.0117 | 0.9997 | |
| "S" described outside the column means that the administration group has a significant difference at a level of significance of 5%. | | | | |

As shown in Table 5, the results of the Scheffe's multiple comparison test suggest that the EGCG concentrations in plasma×time (areas under curve) in the cases where (ii) 20 mM serine+40 mM malic acid, (iii) 40 mM serine+80 mM malic acid, and (iv) 80 mM serine+160 mM malic acid were added to the green tea extract, and the mixture was administered to the rats were significantly high ($P<0.05$) compared with (i) the case where the green tea extract containing no additive was administered, and that the amount of EGCG absorbed from the green tea extract remaining in blood was increased by adding, to the green tea extract, the combination of serine+malic acid at any of concentrations according to the above-mentioned items (ii), (iii), and (iv).

In comparison of the areas under curve until 3 hours after administration ($AUC_{0\rightarrow 3h}$), the degrees of promotion of EGCG absorption from the green tea extract through addition of serine+malic acid in combination in the cases of (ii) addition of 20 mM serine+40 mM malic acid, (iii) addition of 40 mM serine+80 mM malic acid, and (iv) addition of 80 mM serine+160 mM malic acid were 9.9 times, 11.0 times, and 12.7 times as large as that in the case of (i) no additive, respectively.

The results of the above-mentioned two kinds of multiple comparison tests show that EGCG absorption is promoted by the administration solutions (ii), (iii), and (iv) containing serine and malic acid compared with the administration solution (i) containing no additive, but there are no significant differences in the results of the above-mentioned items (ii), (iii), and (iv) although the administration solutions contain serine and malic acid at different concentrations ($P\geq 0.05$). That is, the EGCG absorption promoting effect is considered to almost reach a plateau at the concentration of (ii) 20 mM serine+40 mM malic acid.

<Test Example 5>

Next, in order to demonstrate that the EGCG absorption promoting effect provided by addition of serine+malic acid is effective for green tea generally, the EGCG absorption promoting effect of another kind of green tea extract was tested. Specifically, a *Camellia sinensis* cultivar Benifuuki green tea hot water extract (No. 070423; manufactured by ASAHI SOFT DRINKS CO., Ltd., hereinafter, referred to as *"Camellia sinensis* cultivar Benifuuki extract") was used as the tea extract. In addition, in this test example, the EGCG absorption promoting effect provided by addition of 40 mM serine+80 mM malic acid which is the combination at the middle concentrations among the three kinds of combinations of serine+malic acid used in Test Example 4 was examined.

In the same manner as in Test Example 4, two kinds of administration solutions were prepared by adding serine and malic acid to the *Camellia sinensis* cultivar Benifuuki extract solution so that the final concentrations were (i) no additive and (ii) 40 mM serine+80 mM malic acid, and the respective administration solutions were orally administered forcibly to rats with a cannula in the vein, and EGCG concentrations in plasma obtained with time after administration were measured and converted into concentrations×time values (areas under curve) to compare amounts of EGCG remaining in blood. The final EGCG concentration derived from the *Camellia sinensis* cultivar Benifuuki extract contained in each administration solution was adjusted to 1 mM.

FIG. 7 shows time-course changes in EGCG concentrations in rat plasma until 3 hours after administration of the administration solutions. In addition, FIG. 8 shows time-course changes in EGCG concentrations in plasmaxtime (areas under curve). The results were statistically analyzed as described below.

First, for the time-course changes in EGCG concentrations in plasma until 3 hours after administration of the administration solutions to the rats, two-way factorial analysis of variance with replication based on factors, i.e., the kinds of the administration solutions and elapsed time after administration was performed. Table 6 shows the results.

[Table 6]

| Variation factor | Sum of squared deviation | Degree of freedom | Mean square | F value | P value | F(0.95) |
|---|---|---|---|---|---|---|
| Total variation | 0.5876 | 37 | | | | |
| Variation depending on kind of administration solution | 0.2399 | 1 | 0.2399 | 21.0950 | 0.0001 | 4.1960 |
| Variation depending on elapsed time after administration | 0.0091 | 4 | 0.0023 | 0.2003 | 0.9361 | 2.7141 |
| Interaction | 0.0202 | 4 | 0.0051 | 0.4446 | 0.7754 | 2.7141 |
| Error variation | 0.3184 | 28 | 0.0114 | | | |

As shown in Table 6, there was a significant difference (P<0.05) between the kinds of the administration solutions. It was found that the EGCG concentration in plasma in the case of administration of the *Camellia sinensis* cultivar Benifuuki extract having added thereto (ii) 40 mM serine+80 mM malic acid to the rats was significantly higher than that in the case of administration of the *Camellia sinensis* cultivar Benifuuki extract containing (i) no additive, and that EGCG absorption from the *Camellia sinensis* cultivar Benifuuki extract was promoted by adding serine+malic acid in combination to the *Camellia sinensis* cultivar Benifuuki extract in the same manner as in the case of addition to the green tea extract shown in Test Example 4.

Subsequently, in the same manner as above, two-way factorial analysis of variance with replication based on factors, i.e., the EGCG concentrations in plasma until 3 hours after administration of the administration solutions to the rats×time (areas under curve) and elapsed time after administration was performed. Table 7 shows the results.

[Table 7]

| Variation factor | Sum of squared deviation | Degree of freedom | Mean square | F value | P value | F(0.95) |
|---|---|---|---|---|---|---|
| Total variation | 1.3581 | 37 | | | | |
| Variation depending on kind of administration solution | 0.3775 | 1 | 0.3775 | 15.2306 | 0.0005 | 4.1960 |
| Variation depending on elapsed time after administration | 0.0940 | 4 | 0.0235 | 0.9485 | 0.4508 | 2.7141 |
| Interaction | 0.1926 | 4 | 0.0482 | 1.9432 | 0.1309 | 2.7141 |
| Error variation | 0.6939 | 28 | 0.0248 | | | |

As shown in Table 7, there was a significant difference (P<0.05) between the kinds of the administration solutions. It was found that the EGCG concentration in plasma×time (area under curve) in the case of administration of the *Camellia sinensis* cultivar Benifuuki extract having added thereto (ii) 40 mM serine+80 mM malic acid to the rats was significantly higher than that in the case of administration of the *Camellia sinensis* cultivar Benifuuki extract containing (i) no additive, and that the amount of EGCG absorbed from the *Camellia sinensis* cultivar Benifuuki extract remaining in blood was increased by adding serine+malic acid in combination to the *Camellia sinensis* cultivar Benifuuki extract in the same manner as in the case of addition to the green tea extract shown in Test Example 4.

In comparison of the (areas under curve) until 3 hours after administration ($AUC_{0\rightarrow 3h}$), the degree of promotion of EGCG absorption from the *Camellia sinensis* cultivar Benifuuki extract through (ii) addition of 40 mM serine+80 mM malic acid in combination was 28.6 times as large as that in the case of (i) no additive.

<Test Example 6>

As for an EGCG reagent replaced in green tea extracts, the EGCG absorption promoting effect provided by addition of 20 mM serine+40 mM malic acid, which is the combination of serine and malic acid at the lowest concentrations among the three kinds of combinations of serine+malic acid used in Test Example 4, was examined in the same manner as in Test Example 4.

In the same manner as in Test Example 4, two kinds of administration solutions were prepared by adding serine and malic acid to the administration solution containing an EGCG reagent at 1 mM so that the final concentrations were (i) no additive and (ii) 20 mM serine+40 mM malic acid, and the respective administration solutions were orally administered forcibly to rats with a cannula in the vein, and EGCG concentrations in plasma obtained by blood collection with time after administration were measured and converted into concentration×time values (areas under curve) to compare amounts of EGCG remaining in blood.

FIG. 9 shows time-course changes in EGCG concentrations in rat plasma until 3 hours after administration of the administration solutions. In addition, FIG. 10 shows time-course changes in EGCG concentrations in plasma×time (areas under curve). The results were statistically analyzed as described below.

First, for the time-course changes in EGCG concentrations in plasma until 3 hours after administration of the administration solutions to the rats, two-way factorial analysis of variance with replication based on factors, i.e., the kinds of the administration solutions and elapsed time after administration was performed. Table 8 shows the results.

[Table 8]

| Variation factor | Sum of squared deviation | Degree of freedom | Mean square | F value | P value | F(0.95) |
|---|---|---|---|---|---|---|
| Total variation | 0.008576 | 39 | | | | |
| Variation depending on kind of administration solution | 0.001941 | 1 | 0.0019 | 15.7355 | 0.0004 | 4.1709 |
| Variation depending on elapsed time after administration | 0.001454 | 4 | 0.0004 | 2.9477 | 0.0362 | 2.6896 |
| Interaction | 0.001479 | 4 | 0.0004 | 2.9984 | 0.0340 | 2.6896 |
| Error variation | 0.003701 | 30 | 0.0001 | | | |

As shown in Table 8, there was a significant difference (P<0.05) between the kinds of the administration solutions. It was found that the EGCG concentration in plasma in the case of administration of the EGCG reagent solution having added thereto (ii) 20 mM serine+40 mM malic acid to the rats was significantly higher than that in the case of administration of the EGCG reagent solution containing (i) no additive, and that EGCG absorption was promoted by adding serine+malic acid in combination to the EGCG reagent solution in the same manner as in the case of addition to the green tea extract shown in each of Test Example 4 and Test Example 5.

Subsequently, in the same manner as above, two-way factorial analysis of variance with replication based on factors, i.e., the EGCG concentrations in plasma until 3 hours after administration of the administration solutions to the rats×time (areas under curve) and elapsed time after administration was performed. Table 9 shows the results.

[Table 9]

| Variation factor | Sum of squared deviation | Degree of freedom | Mean square | F value | P value | F(0.95) |
|---|---|---|---|---|---|---|
| Total variation | 0.01025 | 39 | | | | |
| Variation depending on kind of administration solution | 0.00306 | 1 | 0.0031 | 23.7175 | 3.4E-05 | 4.1709 |
| Variation depending on elapsed time after administration | 0.00250 | 4 | 0.0006 | 4.8531 | 0.0039 | 2.6896 |
| Interaction | 0.00081 | 4· | 0.0002 | 1.5788 | 0.2055 | 2.6896 |
| Error variation | 0.00387 | 30 | 0.0001 | | | |

As shown in Table 9, there was a significant difference (P<0.05) between the kinds of the administration solutions. It was found that the EGCG concentration in plasma×time (area under curve) in the case of administration of the EGCG reagent solution having added thereto (ii) 20 mM serine+40 mM malic acid to the rats was significantly higher than that in the case of administration of the EGCG reagent solution containing (i) no additive, and that the amount of EGCG adsorbed remaining in blood was increased by adding serine+malic acid in combination to the EGCG reagent solution in the same manner as in the case of addition to the green tea extract shown in each of Test Example 4 and Test Example 5.

In comparison of the (areas under curve) until 3 hours after administration ($AUC_{0\rightarrow 3h}$), the degree of promotion of EGCG absorption from the EGCG reagent solution through (ii) addition of 20 mM serine+40 mM malic acid in combination was 3.1 times as large as that in the case of (i) no additive.

While Test Example 4 to 6 above show the combinations of serine+malic acid as examples of the foods or food-related ingredients to be added to promote EGCG absorption from the two different kinds of green tea extracts and EGCG reagent, in consideration with the results of the in *vitro* tests shown in Test Examples 2 and 3 above, it is suggested that the EGCG absorption promoting effect can be achieved by adding capric acid, lauric acid, grapefruit juice, serine, aspartic acid, and malic acid singly or in combination.

<Test Example 7>

For *Camellia sinensis* cultivar Benifuuki extracts *(Camellia sinensis* cultivar Benifuuki tea hot water extract manufactured by ASAHI SOFT DRINKS CO., Ltd.; lot 1 [i], lot 2 [ii], and lot 3 [iii]) and green tea extracts (green tea hot water extract manufactured by San-Ei Gen F.F.I., Inc.; lot 4 [iv] and lot 5 [v]), absorbability of EGCG by rats were compared. Specifically, each of administration solutions prepared so as to have an EGCG concentration of 1 mM was orally administered forcibly to rats in a single dose, and EGCG concentrations in plasma obtained by blood collection with time after administration were measured and converted by a trapezoidal method into areas under curve (AUC) to compare amounts of EGCG remaining in blood.

More specific experimental procedures are as described below.

Rats used in this experiment (Sprague Dawley, male, 8-week-old; purchased from Japan SLC, Inc.) were subjected to indwelling surgery in advance by inserting a cannula from the jugular vein toward the heart so that the opening of the top of the cannula was located in the vicinity of the right atrial inlet, and a 1-week recuperation period was taken until the start of the experiment. During the recuperation period, the rats were fed individually in cages equipped with floor nets and allowed to ingest CE-2 feed (manufactured by CLEA Japan, Inc.) freely. The numbers of samples of the administration solutions are as follows: [i] *Camellia sinensis* cultivar Benifuuki extract lot 1-administered group: n=7; [ii] *Camellia sinensis* cultivar Benifuuki extract lot 2-administered group: n=7; [iii] *Camellia sinensis fl:r-.1 e-:* cultivar Benifuuki extract lot 3-administered group: n=6; [iv] green tea extract lot 4-administered group: n=5; and [v] green tea extract lot 5-administered group: n=4.

To the rats which had fasted for 16 hours from the early-evening on the previous day of the experiment, each of the administration solutions [i] to [v] was orally administered forcibly at a single dose of 1 mL per 100 g body weight of the rats. Before administration and 0.25, 0.5, 1, 2, 3 hours after administration, heparin blood collection was performed in an amount of 0.5 mL through the cannula from each rat, and immediately after blood collection, plasma was separated and stored at -80°C under an acidic condition until analysis.

The EGCG concentration in plasma was measured in the same manner as in Test Example 4. That is, the concentration was measured as follows: each plasma was extracted with ethyl acetate under an acidic condition and evaporated to dryness; and the residue was then dissolved in a solution for a mobile phase of HPLC and subjected to HPLC analysis (electrochemical detection method). Separation of EGCG by HPLC was performed using an HPLC apparatus (SCL-10Avp; manufactured by Shimadzu Corporation) equipped with a reversed-phase column with a size of 2.0 mm×150 mm (particle size: 5 μm) (CAPCELL PAK C18MGII; manufactured by Shiseido Co., Ltd.) at a column temperature of 40°C. Isocratic elution was performed at a sample injection volume to the column of 20 μL using 0.1% phosphoric acid containing 0.1 mM EDTA·2Na:acetonitrile=90:10 as the mobile phase at a flow rate of 0.4 mL/min. Detection of EGCG was performed using an electrochemical detector (NANOSPACESI-2; manufactured by Shiseido Co., Ltd.), and a peak area was calculated from an elution pattern of a current value detected at an applied voltage of 600 mV and quantified using a standard line prepared from peak areas of an EGCG standard substance having known concentrations. The retention time of the EGCG standard substance was 8.0 minutes, and the detection sensitivity was 2 nM. The EGCG concentrations in actual administration solutions were also analyzed again, and it was confirmed that EGCG was administered to the rats in scheduled amounts. In this case, the EGCG concentrations in plasma were measured before and after the deconjugation treatment with β-glucuronidase and sulfatase, and the results show that the EGCG concentrations were not changed before and after the deconjugation treatment. Therefore, it was considered that most of EGCG in blood was present as an unconjugated free body. Accordingly, all the results to be shown below are measurement results in the case where no deconjugation treatment was performed.

FIG. 11 shows time-course changes in EGCG concentrations (mean±SEM) in rat plasma until 3 hours after administration of the administration solutions. In addition, FIG. 12 shows time-course changes in EGCG concentrations in plasma×time (areas under curve) (mean±SEM). The results were statistically analyzed as described below.

A multiple comparison test (Fisher's PLSD method; level of significance: 5%) was performed by two-way factorial analysis of variance with replication based on factors, i.e., the EGCG concentrations in plasma until 3 hours after administration of the administration solutions to the rats×time (areas under curve) and elapsed time after administration. Table 10 shows the results.

[Table 10]

| Multiple comparison test by Fisher's PLSD method on time-course changes in EGCG concentrations in plasma of rats to which *Camellia sinensis* cultivar Benifuuki extract and "green tea extract" solution each containing 1 mM EGCG were administered×time (areas under curve) | | | | |
|---|---|---|---|---|
| | Difference in mean values | Critical value | P value | |
| extract [i] vs extract [ii] | 0.0034 | 0.0033 | 0.044 | S |
| extract [i] vs extract [iii] | 0.0043 | 0.0034 | 0.014 | S |
| extract [i] vs "green tea extract" [iv] | 0.0083 | 0.0037 | 0.000 | S |
| extract [i] vs "green tea extract" [v] | 0.0084 | 0.0039 | 0.000 | S |
| extract [ii] vs extract [iii] | 0.0009 | 0.0034 | 0.596 | |
| extract [ii] vs "green tea extract" [iv] | 0.0049 | 0.0037 | 0.009 | S |
| extract [ii] vs "green tea extract" [v] | 0.0050 | 0.0039 | 0.011 | S |
| extract [iii] vs "green tea extract" [iv] | 0.0040 | 0.0038 | 0.040 | S |
| extract [iii] vs "green tea extract" [v] | 0.0041 | 0.0040 | 0.044 | S |
| "green tea extract" [iv] vs "green tea extract" [v] | 0.0001 | 0.0042 | 0.949 | |
| "S" described outside the column means that the administration group has a significant difference at a level of significance of 5%. | | | | |

As shown in Table 10, the results of the multiple comparison test show that there are significant differences in the areas under curve of the EGCG concentrations in plasma between the *Camellia sinensis* cultivar Benifuuki extract [i] and the *Camellia sinensis* cultivar Benifuuki extract [ii] and between the *Camellia sinensis* cultivar Benifuuki extract [i] and the *Camellia sinensis* cultivar Benifuuki extract [iii], and that there are differences in the amounts of EGCG remaining in blood between different lots of *Camellia sinensis* cultivar Benifuuki extracts. However, the areas under curve of the EGCG concentrations in plasma in all the cases of administration of the *Camellia sinensis* cultivar Benifuuki extract [i], *Camellia sinensis* cultivar Benifuuki extract [ii], and *Camellia sinensis* cultivar Benifuuki extract [iii] were found to be significantly high compared with the case of administration of the green tea extract [iv] or green tea extract [v]. In other words, although the *Camellia sinensis* cultivar Benifuuki extracts and green tea extracts each having the same EGCG content were administered, the amounts of EGCG remaining in blood in the cases of administration of *Camellia sinensis* cultivar Benifuuki extracts were found to be significantly higher than those in the cases of administration of the green tea extracts. In comparison of the areas under curve until 3 hours after administration, the amounts of EGCG remaining in blood in the cases of administration of *Camellia sinensis* cultivar Benifuuki extract [i], *Camellia sinensis* cultivar Benifuuki *extract* [ii], and *Camellia sinensis* cultivar Benifuuki extract [iii] were found to be 5.3 times, 4.4 times, and 3.7 times as large as the amount in the case of the green tea extract [iv], respectively, and were found to be 4.8 times, 4.0 times, and 3.4 times as large as the amount in the case of the green tea extract [v], respectively.

The results reveal that the *Camellia sinensis* cultivar Benifuuki extracts have universally higher EGCG absorbability than that of normal green tea extracts although the absorbability varies depending on the lots.

<Test Example 8>

Test Example 7 shows that, in general, the *Camellia sinensis* cultivar Benifuuki extracts are excellent in EGCG absorbability compared with usual green tea extracts. The reason why the significant differences are found in EGCG absorbability between the *Camellia sinensis* cultivar Benifuuki extracts and the usual green tea extracts although both are extracts obtained by the same hot-water extraction procedures is probably that substances contained in the extracts differ from each other. That is, the green tea extracts may contain an ingredient which inhibits EGCG absorption, or the *Camellia sinensis* cultivar Benifuuki extracts may contain an ingredient which promotes EGCG absorption. In order to gain the chance of investigation of the possibility, an experiment shown in this test example was performed. Specifically, a *Camellia sinensis* cultivar Benifuuki extract solution, a usual green tea extract solution, and an EGCG reagent solution were prepared so as to have the same EGCG concentration, and solutions obtained by mixing the solutions in appropriate combination were administered to rats to investigate changes in EGCG absorbability.

More specific experimental procedures are as described below.

Three kinds of administration solutions, i.e., [i] a 1 mM solution of an EGCG reagent (manufactured by Sigma; Cat. No. E4143), [ii] a mixed solution of the EGCG reagent and a green tea extract (mixed solution of [1 mM EGCG reagent solution]:[Green tea extract solution prepared so as to have an EGCG concentration of 1 mM]=1:1 (v/v)), [iii] a mixed solution of a *Camellia sinensis* cultivar Benifuuki extract and the green tea extract (mixed solution of [*Camellia sinensis* cultivar Benifuuki extract solution prepared so as to have an EGCG concentration of 1 mM]:[Green tea extract solution prepared so as to have an EGCG concentration of 1 mM]=1:1 (v/v)) were prepared. Therefore, all the administration solutions contain EGCG at a concentration of 1 mM. It should be noted that the *Camellia sinensis* cultivar Benifuuki extract used in the experiment of this test example was lot 1 of the *Camellia sinensis* cultivar Benifuuki tea hot water extract manufactured by ASAHI SOFT DRINKS CO., Ltd. used in Test Example 7, and the green tea extract was lot 4 of the green tea hot water extract manufactured by San-Ei Gen F.F.I., Inc. used in Test Example 7.

In the same manner as in Test Example 7, the administration solutions were orally administered forcibly to rats mounted with a cannula in the vein, and EGCG concentrations in plasma obtained by blood collection performed with time after administration were measured and converted into areas under curve to compare amounts of EGCG remaining in blood. It should be noted that the numbers of samples of the administration solutions are as follows: [i] EGCG reagent solution-administered group: n=8; [ii] EGCG reagent/green tea extract mixed solution-administered group: n=7; and [iii] *Camellia sinensis* cultivar Benifuuki extract/green tea extract mixed solution-administered group: n=6.

FIG. 13 shows time-course changes in EGCG concentrations (mean±SEM) in rat plasma until 3 hours after administration of the administration solutions. In addition, FIG. 14 shows time-course changes in EGCG concentrations in plasma×time (areas under curve) (mean±SEM). The results were statistically analyzed as described below.

A multiple comparison test (Fisher's PLSD method; level of significance: 5%) was performed by two-way factorial analysis of variance with replication based on factors, i.e., the EGCG concentrations in plasma until 3 hours after administration of the administration solutions to the rats×time (areas under curve) and elapsed time after administration. Table 11 shows the results.

[Table 11]

| Multiple comparison test by Fisher's PLSD method on time-course changes in EGCG concentrations in plasma of rats to which administration solutions each containing EGCG at 1 mM were orally administered forcibly×time (areas under curve) | | | | |
|---|---|---|---|---|
| | Difference in mean values | Critica 1 value | P value | |
| [i] EGCG reagent vs [ii] EGCG reagent+"green tea extract" | 0.0052 | 0.0039 | 0.010 | S |
| [i] EGCG reagent vs [iii] C. sinensis cultivar Benifuuki extract+"green tea extract" | 0.0009 | 0.0041 | 0.657 | |
| [ii] EGCG reagent+"green tea extract" vs [iii] *Camellia sinensis* cultivar Benifuuki extract+"green tea extract" | -0.0042 | 0.0042 | 0.047 | S |
| "S" described outside the column means that the administration group has a significant difference at a level of significance of 5%. | | | | |

As shown in Table 11, the results of the multiple comparison test show that the area under curve of the EGCG concentration in plasma in the case of administration of the EGCG reagent/green tea extract mixed solution to the rats was significantly lowered compared with that in the case of administration of only the EGCG reagent, and that the amount of EGCG remaining in blood decreases by adding the green tea extract to the EGCG reagent. That is, a certain kind of ingredient contained in the green tea extract was estimated to suppress EGCG absorption. On the other hand, when a solution obtained by mixing the *Camellia sinensis* cultivar Benifuuki extract instead of the EGCG reagent in the green tea extract was administered to the rats, the area under curve of the EGCG concentration in plasma returned to a level equal to that in the case of administration of the EGCG reagent solution and became high compared with the case of mixing the EGCG reagent in the green tea extract. This suggests that mixing of the *Camellia sinensis* cultivar Benifuuki extract in the green tea extract negates the EGCG absorption inhibitory effect due to an ingredient in the green tea extract to increase the amount of EGCG absorbed, resulting in an increase in the amount of EGCG remaining in blood.

In comparison of the areas under curve until 3 hours after administration, the degree of the increase in the amount of EGCG remaining in blood obtained by adding the *Camellia sinensis* cultivar Benifuuki extract to the green tea extract was 1.6 times as larger as that in the case of addition of the EGCG reagent to the green tea extract.

The results reveal that the effect of negating the absorption inhibitory effect due to the green tea extract itself is an effect unique to the *Camellia sinensis* cultivar Benifuuki extract, and that addition of the *Camellia sinensis* cultivar Benifuuki extract to the green tea extract having low EGCG absorbability can increase the absorbability of EGCG from the green tea extract.

<Test Example 9> (Catechin compound absorption promoting effect of malic acid in humans)

The effect of malic acid on absorption of a catechin compound in humans was examined. Five healthy men and women which were 20 years old or more and less than 65 years old were selected as test subjects, and a test was performed on the effect of increasing the amount of the catechin compound remaining in blood by ingesting sodium malate simultaneously with the *Camellia sinensis* cultivar Benifuuki extract.

As a test substance, a drink was prepared by suspending a *Camellia sinensis* cultivar Benifuuki green tea hot-water extract powder (manufactured by ASAHI SOFT DRINKS CO., Ltd.) containing a total of 195 mg of nine kinds of catechin compounds including EGCG, 3"-O-methylepigallocatechin gallate, epigallocatechin, epicatechin gallate, epicatechin, gallocatechin gallate, gallocatechin, catechin gallate, and catechin and 135 mg of sodium malate in 40 mL of water. In addition, a drink was prepared by suspending only the *Camellia sinensis* cultivar Benifuuki extract powder in 40 mL of water as a control substance.

The test was performed by a crossover test as described below. Specifically, as the first phase, blood was collected early in the morning from each test subject who had fasted from 21:00 on the previous day of the test, and the subject ingested the test substance orally. Blood collection was performed 30 minutes, 1, 2, 3, and 4 hours after ingestion, and plasma was separated immediately. The resultant plasma was subjected to a deconjugating enzyme treatment with sulfatase and β-glucronidase, and catechin compounds in plasma were extracted with ethyl acetate. In the same manner as in Test Example 4, concentrations of the catechin compounds in plasma were measured by the HPLC-ECD method (electrochemical detection method). After that, in order to completely eliminate the effect of the catechin compounds and malic acid, each subject lived a normal life for 2 days or more. As the second phase, concentrations of the catechin compounds in plasma were measured under the same conditions as those in the first phase except that each subject ingested the control substance. It should be noted that the concentrations of the catechin compounds were determined as a total concentration of five kinds of catechin compounds including EGCG, 3''-O-mehylepigallocatechin gallate, epigallocatechin, epicatechin gallate, and epicatechin.

FIG. 15 shows a graph obtained by plotting the total concentration of the catechins in plasma in the case of ingestion of only the *Camellia sinensis* cultivar Benifuuki extract and the total concentration of the catechins in plasma in the case of ingestion of the *Camellia sinensis* cultivar Benifuuki extract together with sodium malate against the time after ingestion. Further, FIG. 16 shows a graph obtained by plotting the total concentration of the catechins in blood in the case of ingestion of only the *Camellia sinensis* cultivar Benifuuki extract×time (areas under curve: AUC) and AUC in the case of ingestion of the *Camellia sinensis* cultivar Benifuuki extract together with sodium malate against the time after ingestion. As shown in FIG. 16, the area under cure until 4 hours after ingestion ($AUC_{0\rightarrow 4h}$) in the case of ingestion of sodium malate was 1.6 times as large as that in the case of ingestion of no sodium malate, and ingestion of sodium malate was found to significantly increase the amount of the catechins remaining in blood. Therefore, the test in humans also shows that malic acid has the action and effect of promoting absorption of catechin compounds.

<Test Example 10> (Catechin compound absorption promoting effect of *Camellia sinensis* cultivar Benifuuki extract in humans)

A test was performed on the effect of increasing the amount of catechin compounds remaining in blood by allowing healthy adult male test subjects to separately ingest a *Camellia sinensis* cultivar Benifuuki green tea and a usual green tea extract.

As a test substance, a drink was prepared by suspending a *Camellia sinensis* cultivar Benifuuki green tea hot water extraction powder (manufactured by ASAHI SOFT DRINKS CO., Ltd.) containing a total of 180 mg of nine kinds of catechin compounds including EGCG, 3''-O-methylepigallocatechin gallate, epigallocatechin, epicatechin gallate, epicatechin, gallocatechin gallate, gallocatechin, catechin gallate, and catechin in 40 mL of water. In addition, as a control substance, a drink was prepared by suspending a green tea extract powder (manufactured by San-Ei Gen F.F.I., Inc.) containing a total of 180 mg of the nine kinds of the catechin compounds in 40 mL of water.

The test was performed as described below. Specifically, as the first phase, blood was collected early in the morning from each test subject who had fasted from 21:00 on the previous day of the test, and the subject ingested orally the test substance. Blood collection was performed 1, 2, and 4 hours after ingestion, and plasma was separated immediately. The resultant plasma was subjected to a deconjugating enzyme treatment with sulfatase and β-glucronidase, and catechin compounds in plasma were extracted with ethyl acetate. In the same manner as in Test Example 4, concentrations of the catechin compounds in plasma were measured by the HPLC-ECD method (electrochemical detection method). After that, in order to completely eliminate the effect of the catechin compounds ingested, each subject took a break from the test for 7 days or more. As the second phase, concentrations of the catechin compounds in plasma were measured under the same conditions as those in the first phase except that each subject ingested the control substance. It should be noted that the concentrations of the catechin compounds were determined as a total concentration of five kinds of catechin compounds including EGCG, 3"-O-mehylepigallocatechin gallate, epigallocatechin, epicatechin gallate, and epicatechin.

FIG. 17 shows a graph obtained by plotting the total concentration of the catechin compounds in blood in the case of ingestion of the *Camellia sinensis* cultivar Benifuuki extract×time (areas under curve: AUC) and AUC in the case of ingestion of the usual green tea extract against the time after ingestion. It should be noted that as for the case of ingestion of the *Camellia sinensis* cultivar Benifuuki extract, values for the total amount of the five kinds of the catechin compounds including the methylated catechin (+) and values for the total amount of four kinds of the catechin compounds including no methylated catechin (-) are shown.

As shown in FIG. 17, the area under curve until 4 hours after ingestion ($AUC_{0\rightarrow 4h}$) in the case of ingestion of the *Camellia sinensis* cultivar Benifuuki extract was 4.1 times as large as that in the case of the usual green tea extract, and ingestion of the *Camellia sinensis* cultivar Benifuuki extract was found to significantly increase the amount of the catechin compounds remaining in blood. In addition, also in comparison of the values obtained by excluding the methylated catechin unique to *Camellia sinensis* cultivar Benifuuki the remaining amount in the case of ingestion of the *Camellia sinensis* cultivar Benifuuki extract was 3.4 times as large as that in the case of the usual green tea extract. Therefore, the test in humans also shows that the *Camellia sinensis* cultivar Benifuuki extract has the action and effect of promoting absorption of catechin compounds.

## Claims

1. Non-therapeutic use of an agent as an absorption promoter for an epigallocatechin gallate from an extract from the leaves of a green tea cultivar *Yabukita,* wherein the agent comprises, as an active ingredient, a *Camellia sinensis* cultivar *Benifuuki* extract.

2. An agent for use to promote absorption of an epigallocatechin gallate from an extract from the leaves of a green tea cultivar *Yabukita* in a method of medical treatment, wherein the agent comprises, as an active ingredient, a *Camellia sinensis* cultivar *Benifuuki* extract.

3. Non-therapeutic use according to claim 1, wherein the agent is contained in a form of a food or drink, the food or drink comprising the extract from the tea leaves of a green tea cultivar *Yabukita.*

4. Non-therapeutic use according to claim 3, wherein the food or drink comprises one kind selected from the group consisting of: confectionery such as chocolates, biscuits, gums, candies, cookies, gummi candies, and tablet confectionery; cereals; drinks such as powder drinks, soft drinks, milk drinks, nutritional drinks, carbonated drinks, and jelly drinks; and chilled sweets such as ice creams and sherbets.

5. Non-therapeutic use according to claim 1, wherein the agent is contained in a form of a health food or a dietary supplement having one kind of form selected from the group consisting of powders, granules, capsules, syrups, tablets, and sugar-coated tablets, the health food or dietary supplement comprising the extract from the tea leaves of a green tea cultivar *Yabukita.*

## Patentansprüche

1. Nichttherapeutische Verwendung eines Mittels als Absorptionspromotor für ein Epigallocatechingallat aus einem Extrakt aus den Blättern eines Grüntee-Cultivars *Yabukita,* wobei das Mittel einen *Benifuuki-Extrakt* des *Camellia-sinensis*-Cultivars als aktiven Wirkstoff umfasst.

2. Mittel zur Verwendung für die Förderung der Absorption eines Epigallocatechingallats aus einem Extrakt aus den Blättern eines Grüntee-Cultivars *Yabukita* in einem medizinischen Behandlungsverfahren, wobei das Mittel einen *Benifuuki*-Extrakt des *Camellia-sinensis*-Cultivars als aktiven Wirkstoff umfasst.

3. Nichttherapeutische Verwendung nach Anspruch 1, wobei das Mittel in Form eines Nahrungsmittels oder Getränks enthalten ist, wobei das Nahrungsmittel oder Getränk den Extrakt aus den Teeblättern eines Grüntee-Cultivars *Yabukita* umfasst.

4. Nichttherapeutische Verwendung nach Anspruch 3, wobei das Nahrungsmittel oder Getränk eine Art umfasst, die ausgewählt ist aus der Gruppe bestehend aus:

   Süßwaren, wie etwa Schokoladen, Keksen, Gummis, Bonbons, Plätzchen, Kaubonbons und Tafelsüßwaren; Zerealien; Getränken, wie etwa Getränkepulvern, Erfrischungsgetränken, Milchgetränken, Nahrungsgetränken, kohlensäurehaltigen Getränken und Geleegetränken; und gekühlten Süßigkeiten, wie etwa Eiscremen und Sorbets.

5. Nichttherapeutische Verwendung nach Anspruch 1, wobei das Mittel in einer Form eines Gesundheitsnahrungsmittels oder Nahrungsergänzungsmittels enthalten ist, das eine Art von Form aufweist, die aus der aus Pulvern, Granula, Kapseln, Sirupen, Tabletten und zuckerbeschichteten Tabletten bestehenden Gruppe ausgewählt ist, wobei das Gesundheitsnahrungsmittel oder Nahrungsergänzungsmittel den Extrakt aus den Teeblättern eines Grüntee-Cultivars *Yabukita* umfasst.

## Revendications

1. Utilisation non thérapeutique d'un agent en tant que promoteur d'absorption pour un gallate d'épigallocatéchine à partir d'un extrait des feuilles d'un cultivar de thé vert *Yabukita,* dans laquelle l'agent comprend, en tant que principe actif, un extrait de *Benifuuki* de cultivar de *Camellia sinensis.*

2. Agent pour utilisation destinée à promouvoir l'absorption d'un gallate d'épigallocatéchine à partir d'un extrait des feuilles d'un cultivar de thé vert *Yabukita* dans un procédé de traitement médical, lequel agent comprend, en tant que principe actif, un extrait de *Benifuuki* de cultivar de *Camellia sinensis.*

3. Utilisation non thérapeutique selon la revendication 1, dans laquelle l'agent est contenu sous la forme d'un aliment ou d'une boisson, l'aliment ou la boisson comprenant l'extrait des feuilles de thé d'un cultivar de thé vert *Yabukita.*

4. Utilisation non thérapeutique selon la revendication 3, dans laquelle l'aliment ou la boisson comprend un type choisi dans le groupe constitué de : les confiseries telles que les chocolats, les biscuits, les gommes, les bonbons, les cookies, les bonbons gélifiés et les confiseries sous forme de comprimé ; les céréales ; les boissons telles que les boissons en poudre, les boissons gazeuses, les boissons lactées, les boissons nutritionnelles, les boissons carbonatées et les boissons gélifiées ; et les produits sucrés glacés tels que les crèmes glacées et les sorbets.

5. Utilisation non thérapeutique selon la revendication 1, dans laquelle l'agent est contenu sous la forme d'un aliment pour la santé ou d'un supplément diététique ayant un type de forme choisi dans le groupe constitué des poudres, des granulés, des capsules, des sirops, des comprimés et des dragées, l'aliment pour la santé ou le supplément diététique comprenant l'extrait des feuilles de thé d'un cultivar de thé vert *Yabukita.*

FIG. 1

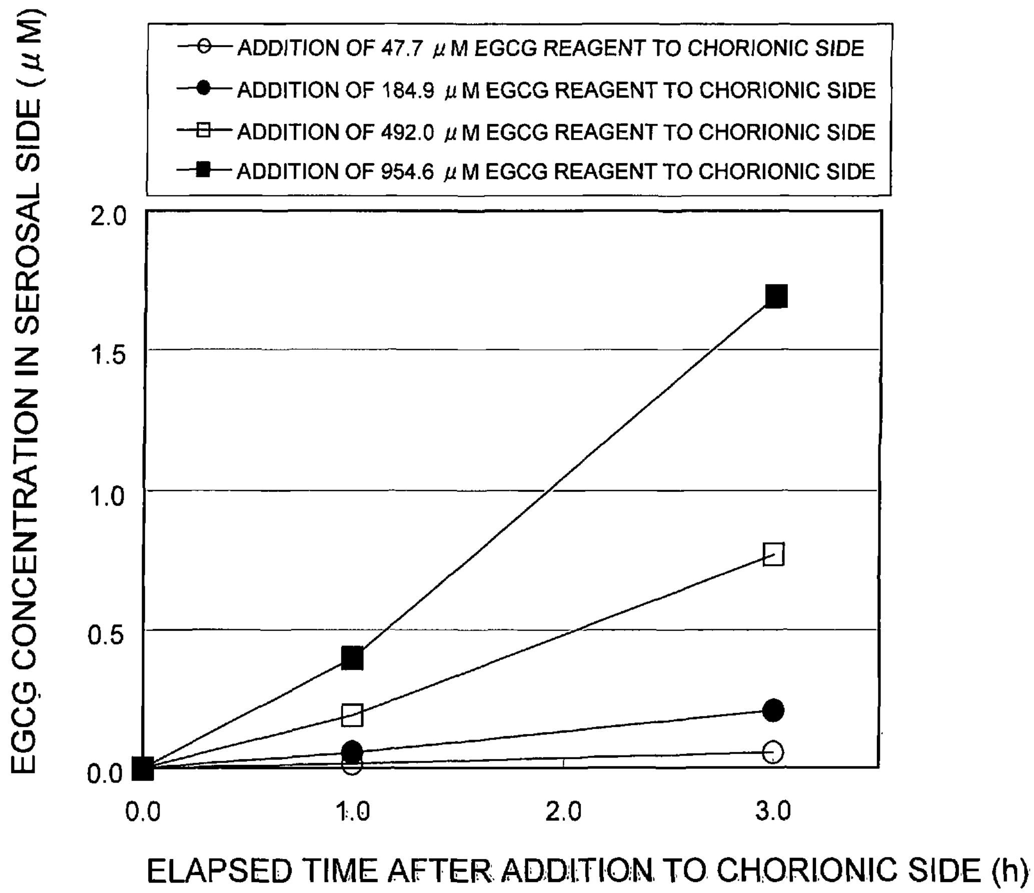
ADDITION OF 47.7 μM EGCG REAGENT TO CHORIONIC SIDE
ADDITION OF 184.9 μM EGCG REAGENT TO CHORIONIC SIDE
ADDITION OF 492.0 μM EGCG REAGENT TO CHORIONIC SIDE
ADDITION OF 954.6 μM EGCG REAGENT TO CHORIONIC SIDE
EGCG CONCENTRATION IN SEROSAL SIDE (μM)
2.0
1.5
1.0
0.5
0.0
0.0
1.0
2.0
3.0
ELAPSED TIME AFTER ADDITION TO CHORIONIC SIDE (h)

FIG. 2

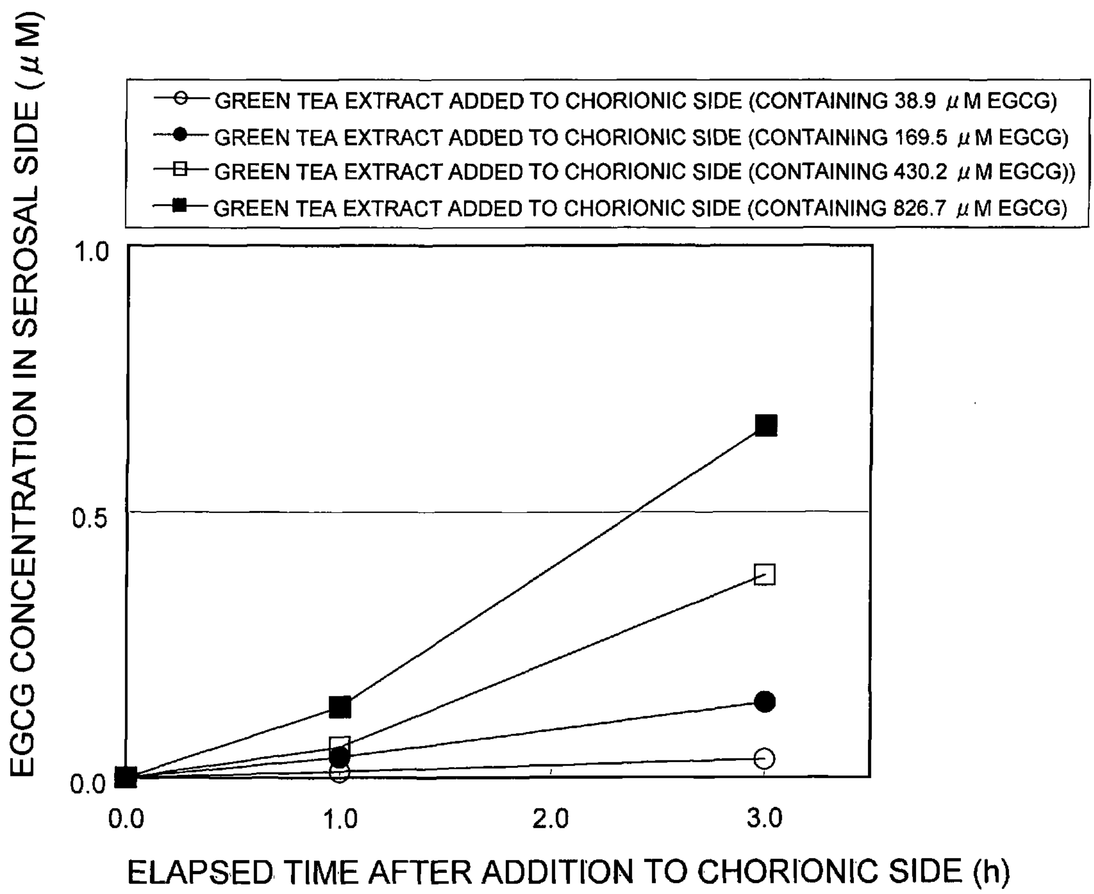
GREEN TEA EXTRACT ADDED TO CHORIONIC SIDE (CONTAINING 38.9 μM EGCG)
GREEN TEA EXTRACT ADDED TO CHORIONIC SIDE (CONTAINING 169.5 μM EGCG)
GREEN TEA EXTRACT ADDED TO CHORIONIC SIDE (CONTAINING 430.2 μM EGCG))
GREEN TEA EXTRACT ADDED TO CHORIONIC SIDE (CONTAINING 826.7 μM EGCG)
EGCG CONCENTRATION IN SEROSAL SIDE (μM)
1.0
0.5
0.0
0.0
1.0
2.0
3.0
ELAPSED TIME AFTER ADDITION TO CHORIONIC SIDE (h)

FIG. 3

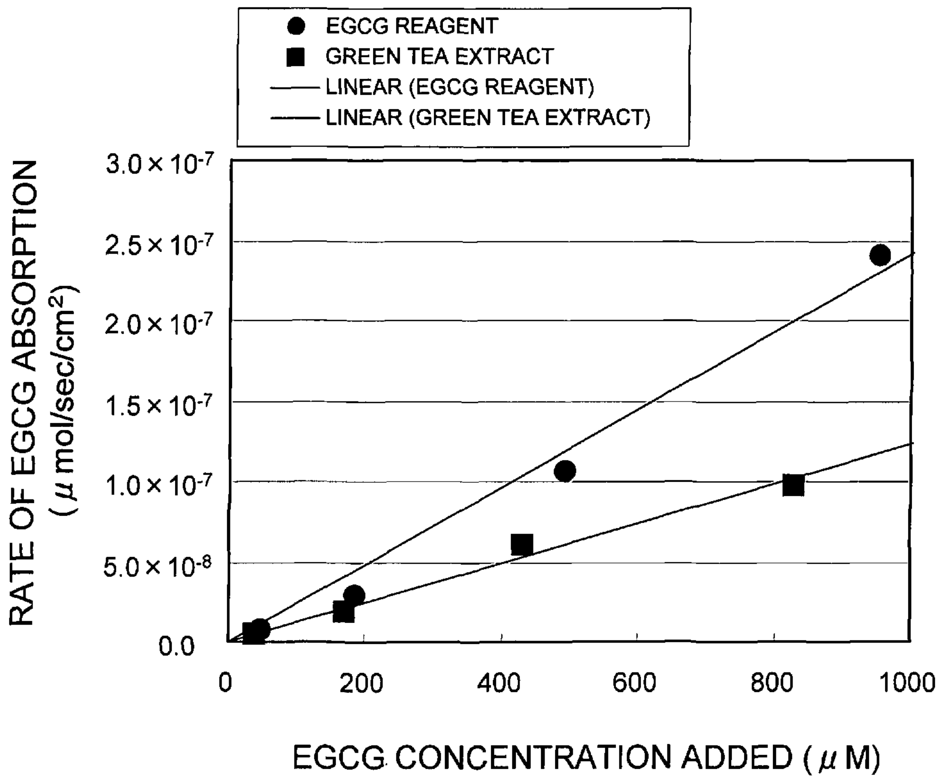
EGCG REAGENT
GREEN TEA EXTRACT
LINEAR (EGCG REAGENT)
LINEAR (GREEN TEA EXTRACT)
RATE OF EGCG ABSORPTION
(μ mol/sec/cm²)
3.0 × 10⁻⁷
2.5 × 10⁻⁷
2.0 × 10⁻⁷
1.5 × 10⁻⁷
1.0 × 10⁻⁷
5.0 × 10⁻⁸
0.0
0
200
400
600
800
1000
EGCG CONCENTRATION ADDED (μ M)

FIG. 4

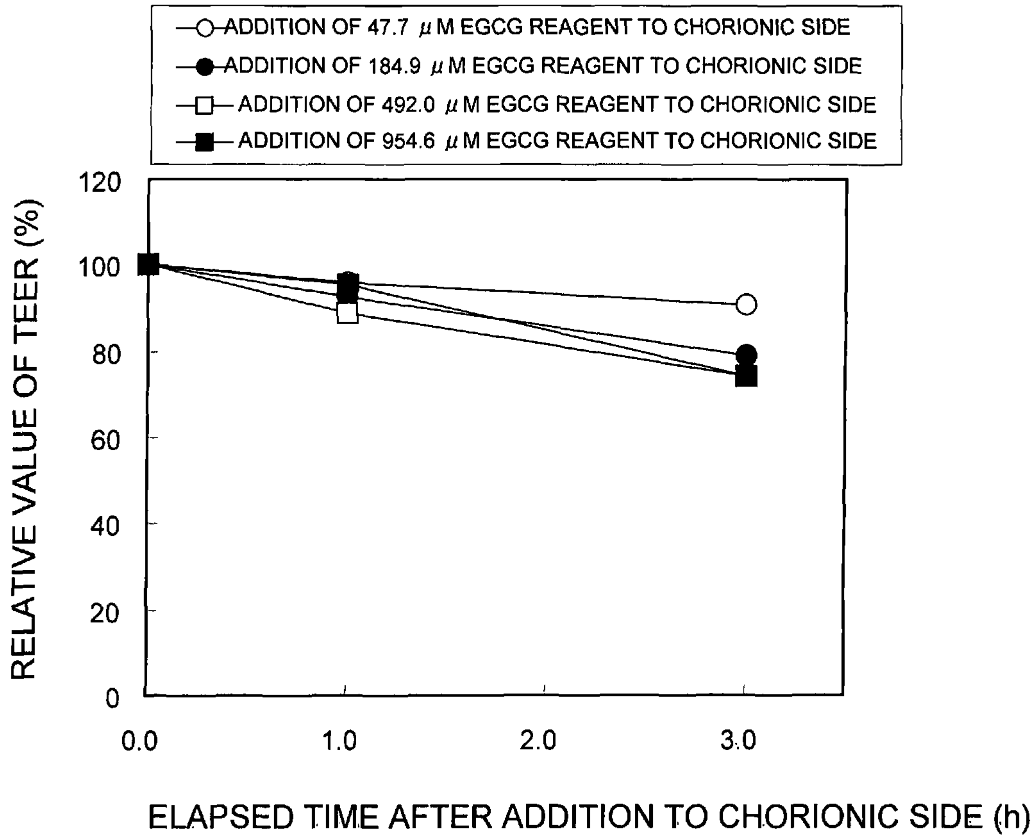
ADDITION OF 47.7 μM EGCG REAGENT TO CHORIONIC SIDE
ADDITION OF 184.9 μM EGCG REAGENT TO CHORIONIC SIDE
ADDITION OF 492.0 μM EGCG REAGENT TO CHORIONIC SIDE
ADDITION OF 954.6 μM EGCG REAGENT TO CHORIONIC SIDE
RELATIVE VALUE OF TEER (%)
120
100
80
60
40
20
0
0.0
1.0
2.0
3.0
ELAPSED TIME AFTER ADDITION TO CHORIONIC SIDE (h)

FIG. 5

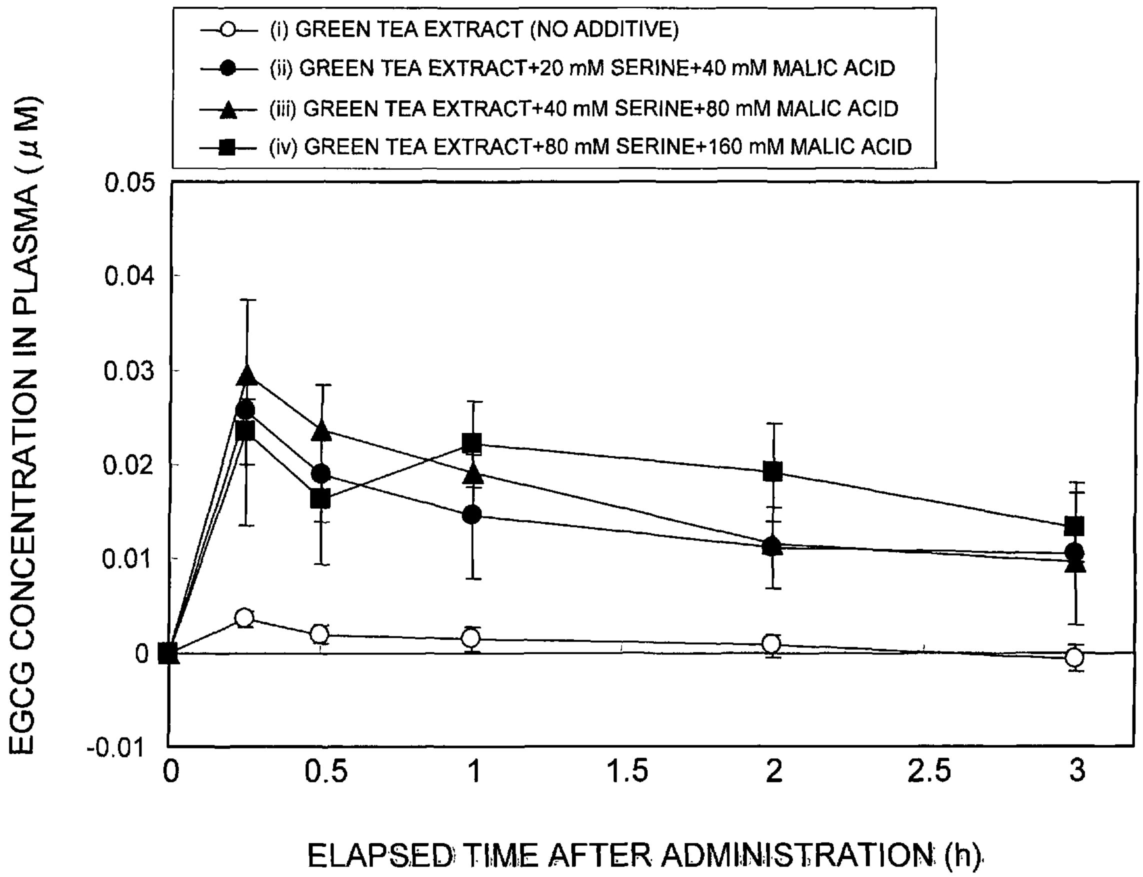
(i) GREEN TEA EXTRACT (NO ADDITIVE)
(ii) GREEN TEA EXTRACT+20 mM SERINE+40 mM MALIC ACID
(iii) GREEN TEA EXTRACT+40 mM SERINE+80 mM MALIC ACID
(iv) GREEN TEA EXTRACT+80 mM SERINE+160 mM MALIC ACID
EGCG CONCENTRATION IN PLASMA (μM)
0.05
0.04
0.03
0.02
0.01
0
-0.01
0
0.5
1
1.5
2
2.5
3
ELAPSED TIME AFTER ADMINISTRATION (h)

FIG. 6

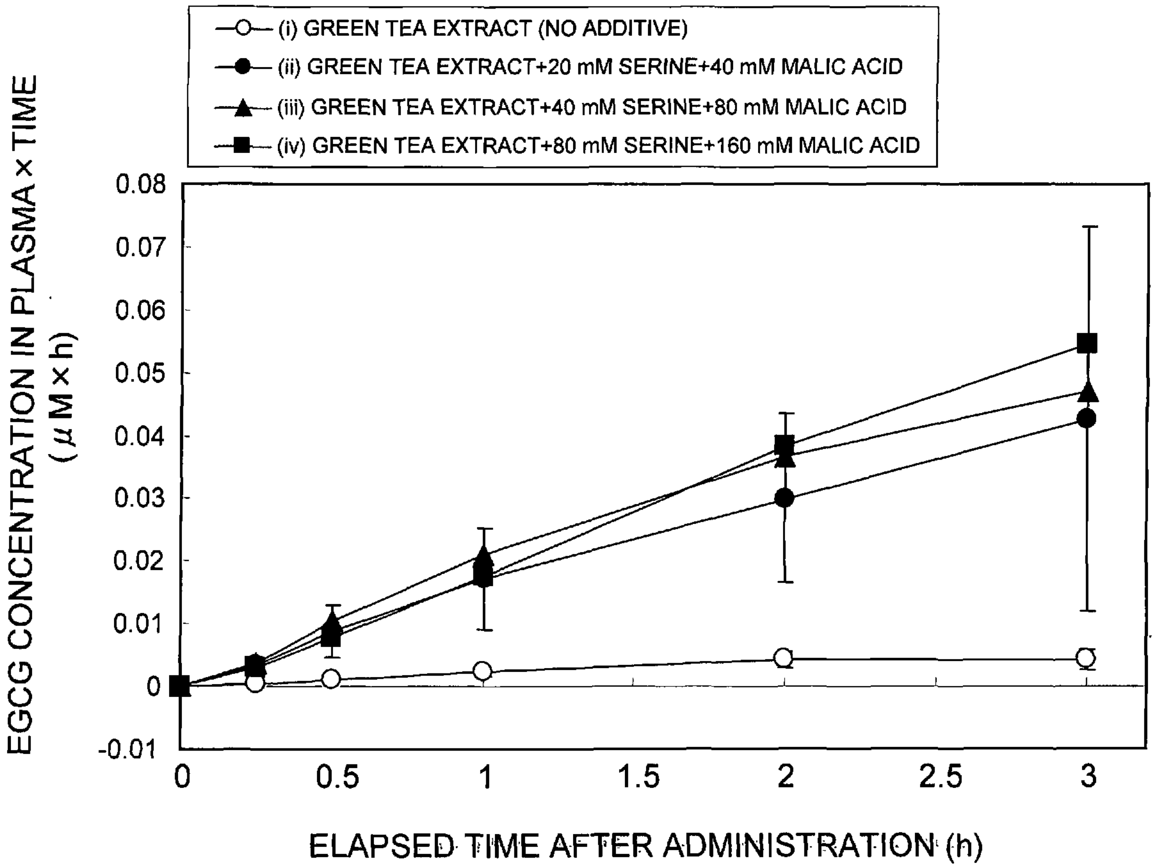
(i) GREEN TEA EXTRACT (NO ADDITIVE)
(ii) GREEN TEA EXTRACT+20 mM SERINE+40 mM MALIC ACID
(iii) GREEN TEA EXTRACT+40 mM SERINE+80 mM MALIC ACID
(iv) GREEN TEA EXTRACT+80 mM SERINE+160 mM MALIC ACID
EGCG CONCENTRATION IN PLASMA × TIME
(μM × h)
0.08
0.07
0.06
0.05
0.04
0.03
0.02
0.01
0
-0.01
0
0.5
1
1.5
2
2.5
3
ELAPSED TIME AFTER ADMINISTRATION (h)

FIG. 7

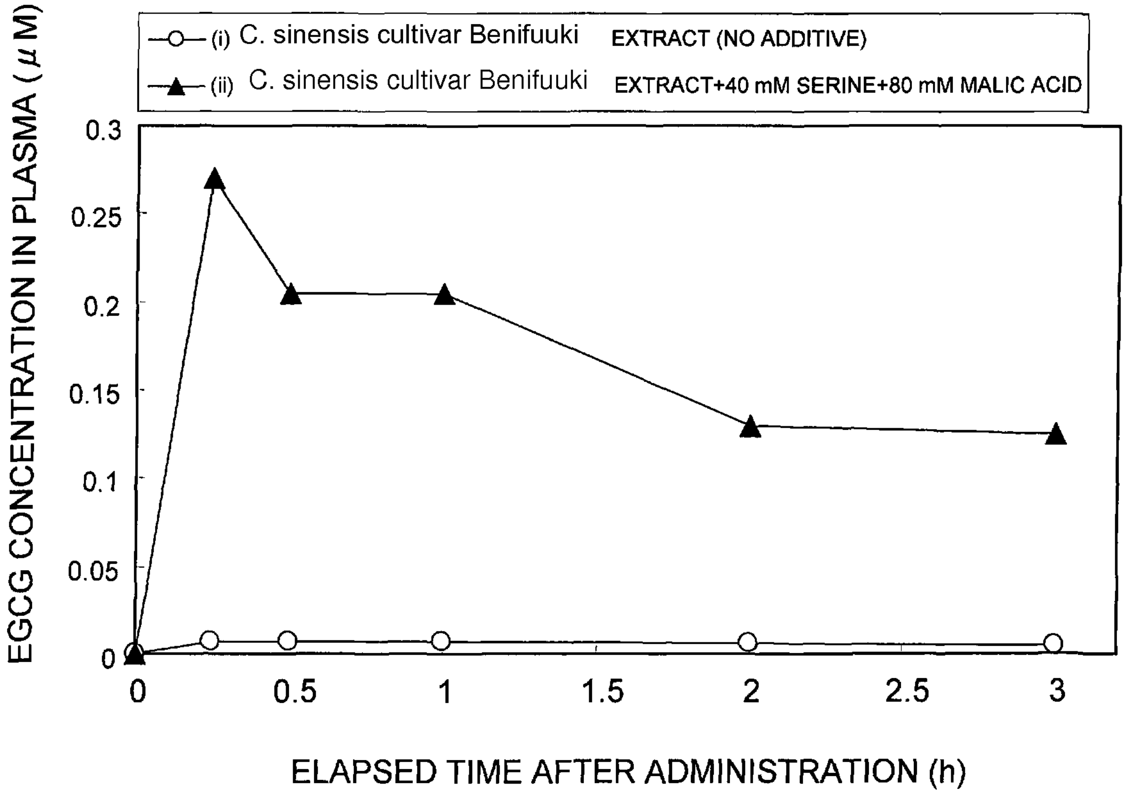
(i) C. sinensis cultivar Benifuuki EXTRACT (NO ADDITIVE)
(ii) C. sinensis cultivar Benifuuki EXTRACT+40 mM SERINE+80 mM MALIC ACID
EGCG CONCENTRATION IN PLASMA (μM)
0.3
0.25
0.2
0.15
0.1
0.05
0
0
0.5
1
1.5
2
2.5
3
ELAPSED TIME AFTER ADMINISTRATION (h)

FIG. 8

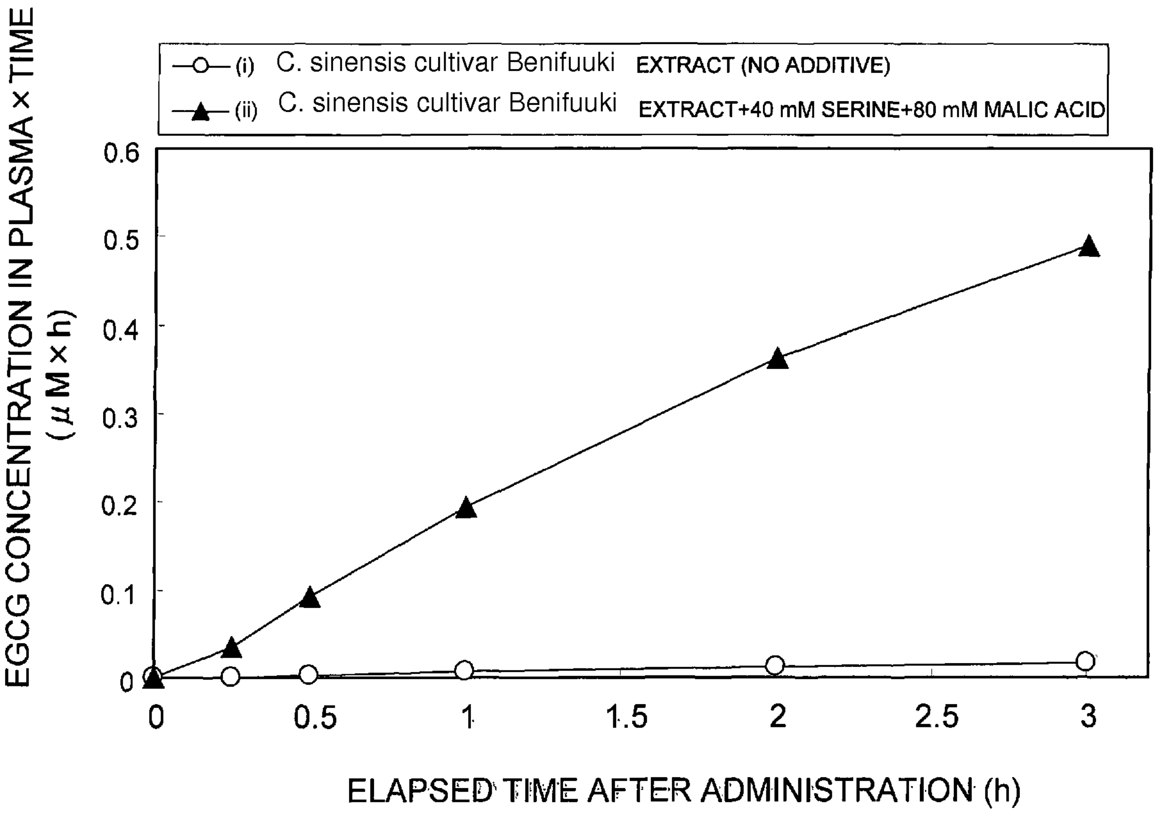
(i) C. sinensis cultivar Benifuuki EXTRACT (NO ADDITIVE)
(ii) C. sinensis cultivar Benifuuki EXTRACT+40 mM SERINE+80 mM MALIC ACID
EGCG CONCENTRATION IN PLASMA × TIME (μM × h)
0.6
0.5
0.4
0.3
0.2
0.1
0
0
0.5
1
1.5
2
2.5
3
ELAPSED TIME AFTER ADMINISTRATION (h)

FIG. 9

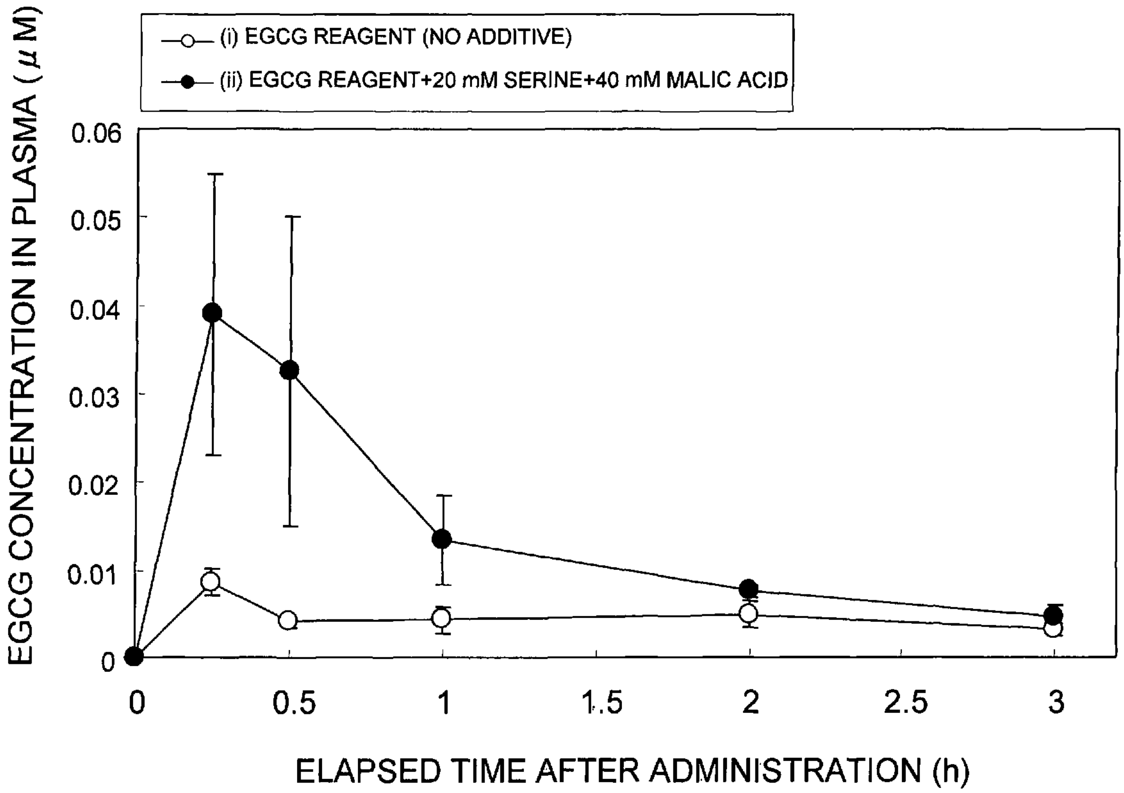
(i) EGCG REAGENT (NO ADDITIVE)
(ii) EGCG REAGENT+20 mM SERINE+40 mM MALIC ACID
EGCG CONCENTRATION IN PLASMA (μM)
0.06
0.05
0.04
0.03
0.02
0.01
0
0
0.5
1
1.5
2
2.5
3
ELAPSED TIME AFTER ADMINISTRATION (h)

FIG. 10

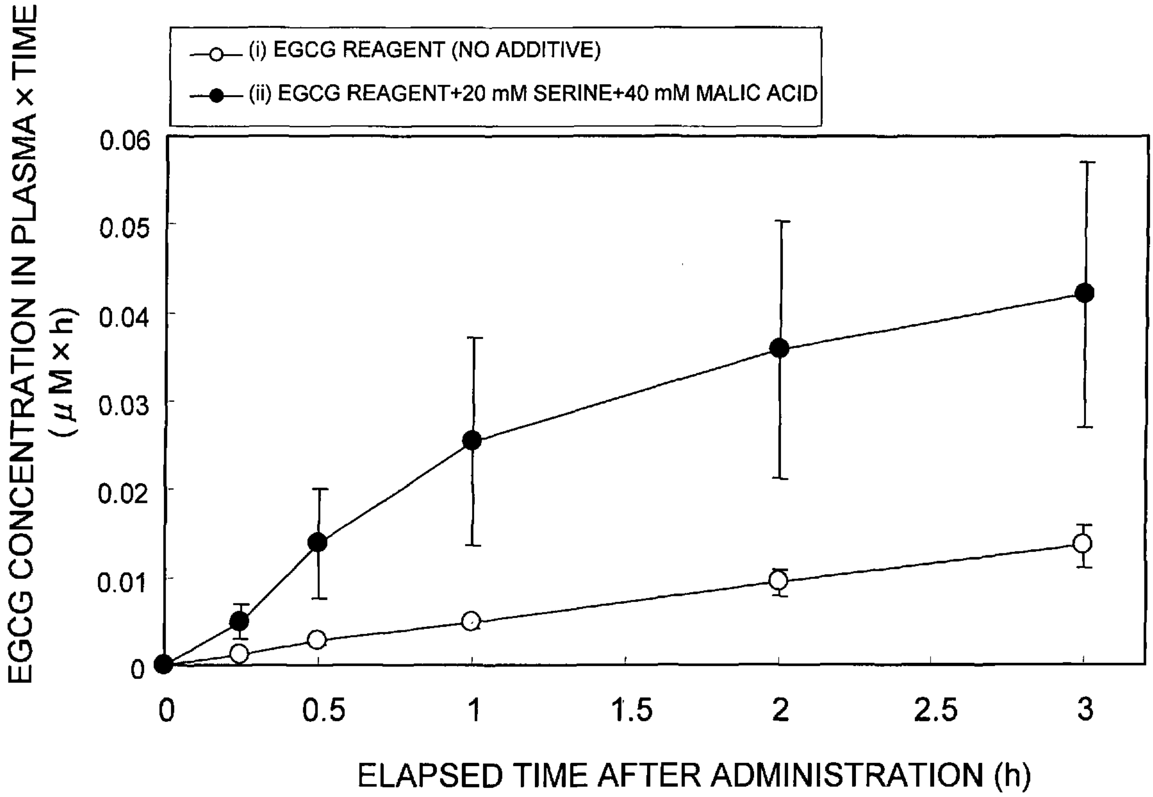
(i) EGCG REAGENT (NO ADDITIVE)
(ii) EGCG REAGENT+20 mM SERINE+40 mM MALIC ACID
EGCG CONCENTRATION IN PLASMA × TIME
( μ M × h)
0.06
0.05
0.04
0.03
0.02
0.01
0
0
0.5
1
1.5
2
2.5
3
ELAPSED TIME AFTER ADMINISTRATION (h)

FIG. 11

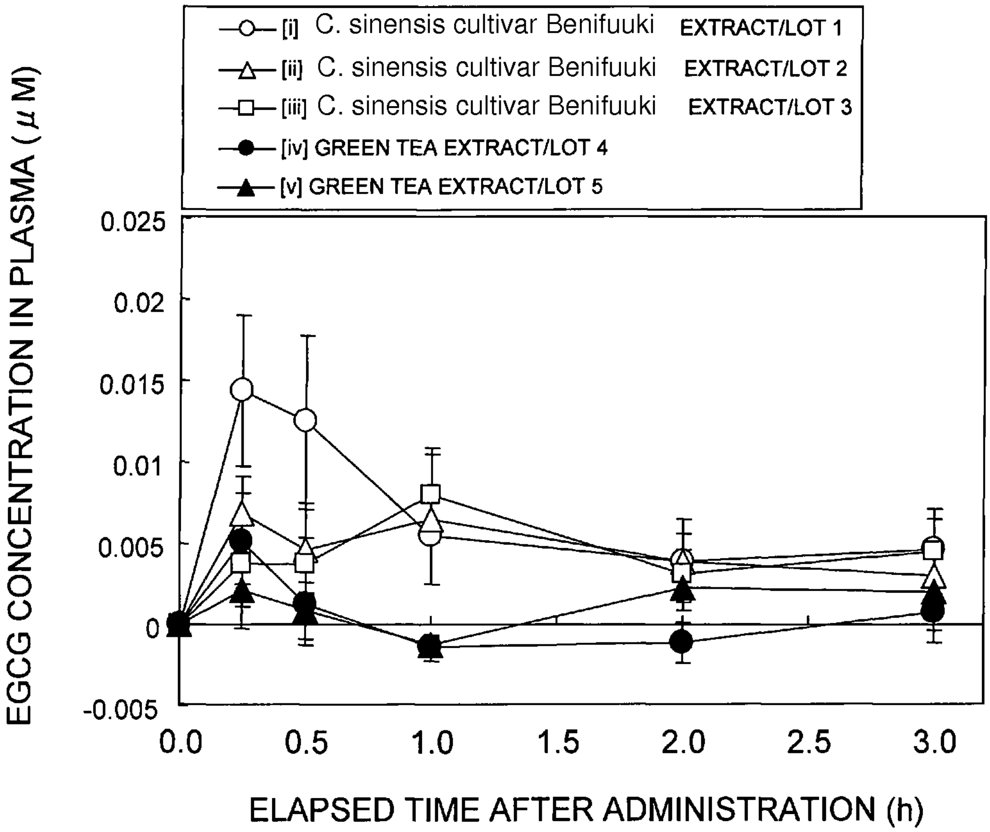
[i] C. sinensis cultivar Benifuuki EXTRACT/LOT 1
[ii] C. sinensis cultivar Benifuuki EXTRACT/LOT 2
[iii] C. sinensis cultivar Benifuuki EXTRACT/LOT 3
[iv] GREEN TEA EXTRACT/LOT 4
[v] GREEN TEA EXTRACT/LOT 5
EGCG CONCENTRATION IN PLASMA (μM)
0.025
0.02
0.015
0.01
0.005
0
-0.005
0.0
0.5
1.0
1.5
2.0
2.5
3.0
ELAPSED TIME AFTER ADMINISTRATION (h)

FIG. 12

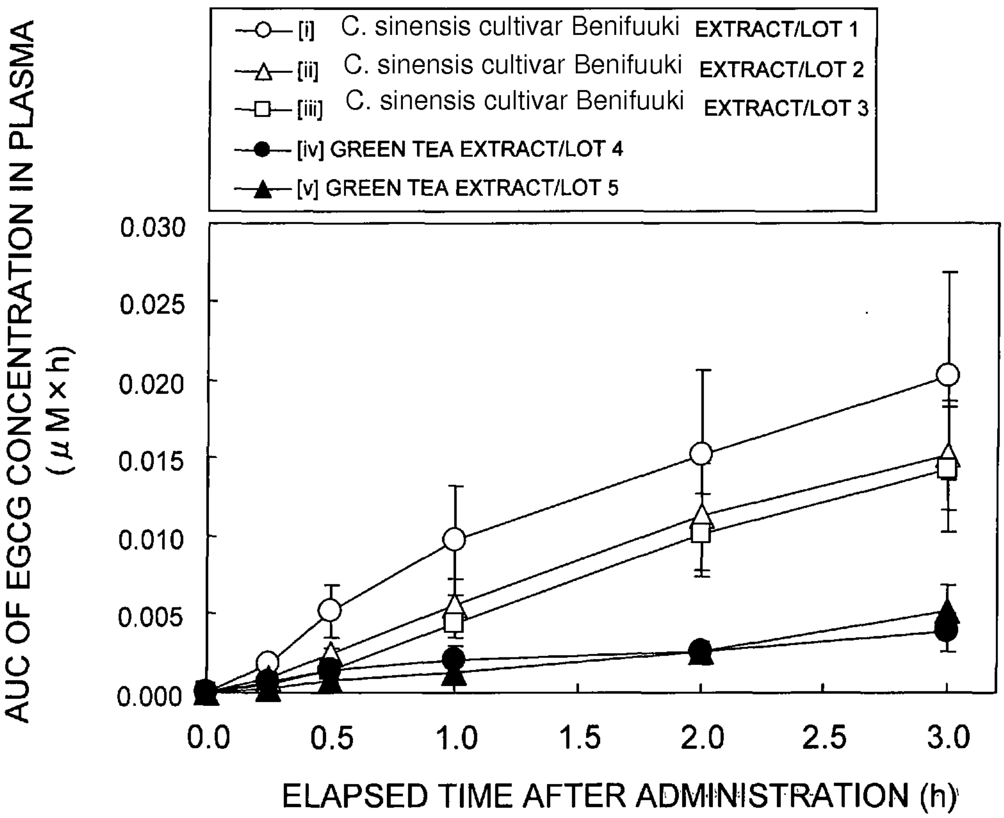
[i] C. sinensis cultivar Benifuuki EXTRACT/LOT 1
[ii] C. sinensis cultivar Benifuuki EXTRACT/LOT 2
[iii] C. sinensis cultivar Benifuuki EXTRACT/LOT 3
[iv] GREEN TEA EXTRACT/LOT 4
[v] GREEN TEA EXTRACT/LOT 5
AUC OF EGCG CONCENTRATION IN PLASMA
(μM × h)
0.030
0.025
0.020
0.015
0.010
0.005
0.000
0.0
0.5
1.0
1.5
2.0
2.5
3.0
ELAPSED TIME AFTER ADMINISTRATION (h)

FIG. 13

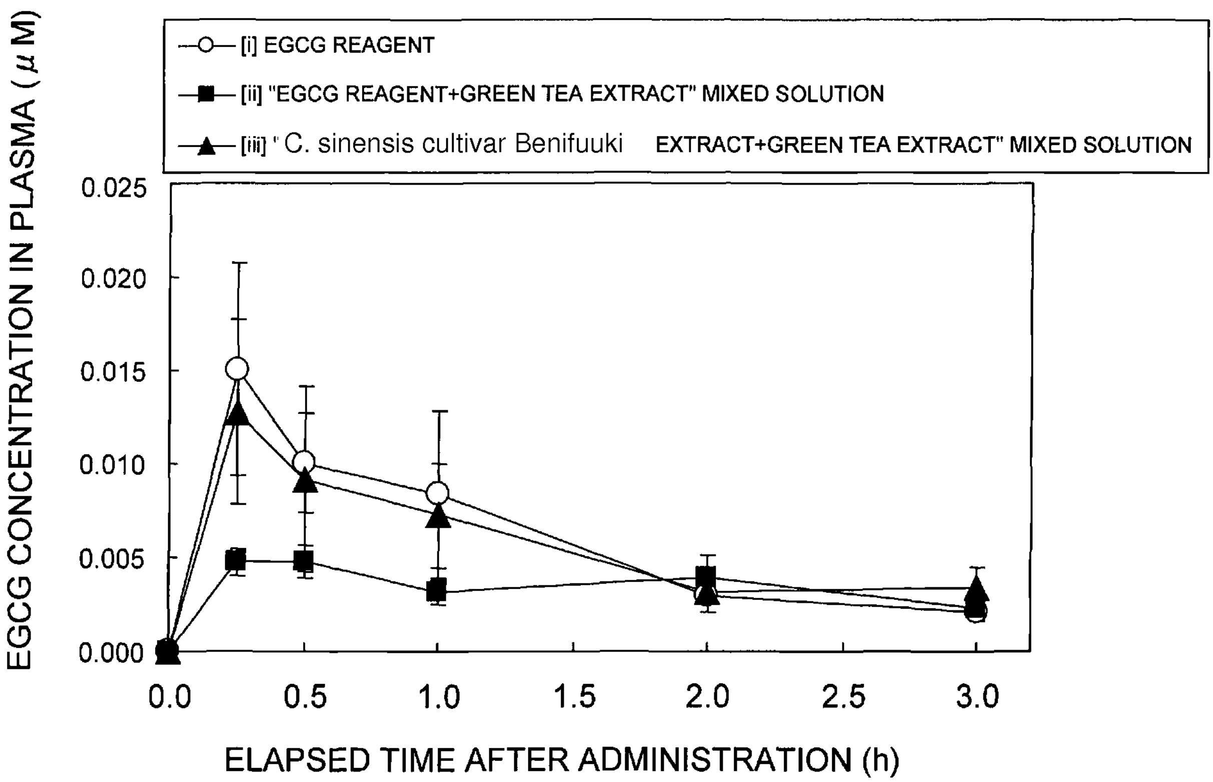
[i] EGCG REAGENT
[ii] "EGCG REAGENT+GREEN TEA EXTRACT" MIXED SOLUTION
[iii] "C. sinensis cultivar Benifuuki EXTRACT+GREEN TEA EXTRACT" MIXED SOLUTION
EGCG CONCENTRATION IN PLASMA (μM)
0.025
0.020
0.015
0.010
0.005
0.000
0.0
0.5
1.0
1.5
2.0
2.5
3.0
ELAPSED TIME AFTER ADMINISTRATION (h)

FIG. 14

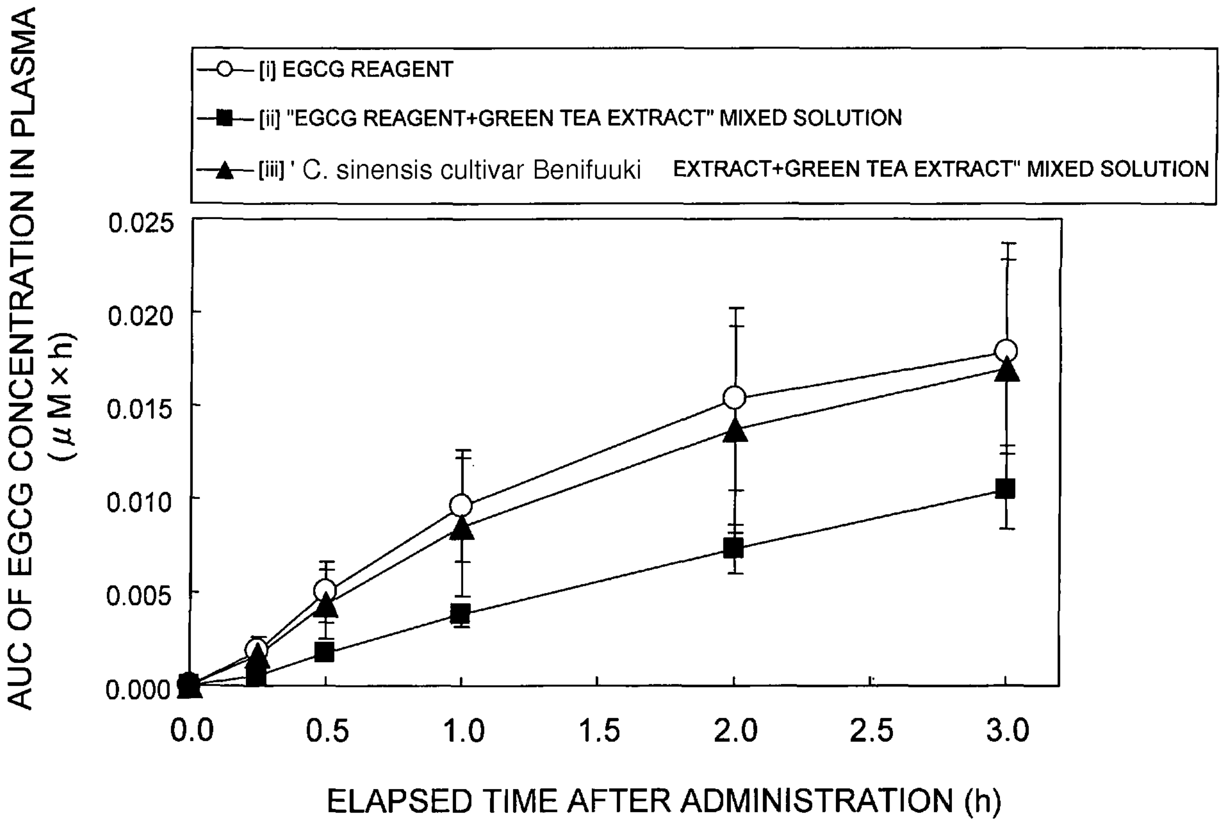
[i] EGCG REAGENT
[ii] "EGCG REAGENT+GREEN TEA EXTRACT" MIXED SOLUTION
[iii] ' C. sinensis cultivar Benifuuki EXTRACT+GREEN TEA EXTRACT" MIXED SOLUTION
AUC OF EGCG CONCENTRATION IN PLASMA (μM×h)
0.025
0.020
0.015
0.010
0.005
0.000
0.0
0.5
1.0
1.5
2.0
2.5
3.0
ELAPSED TIME AFTER ADMINISTRATION (h)

FIG. 15

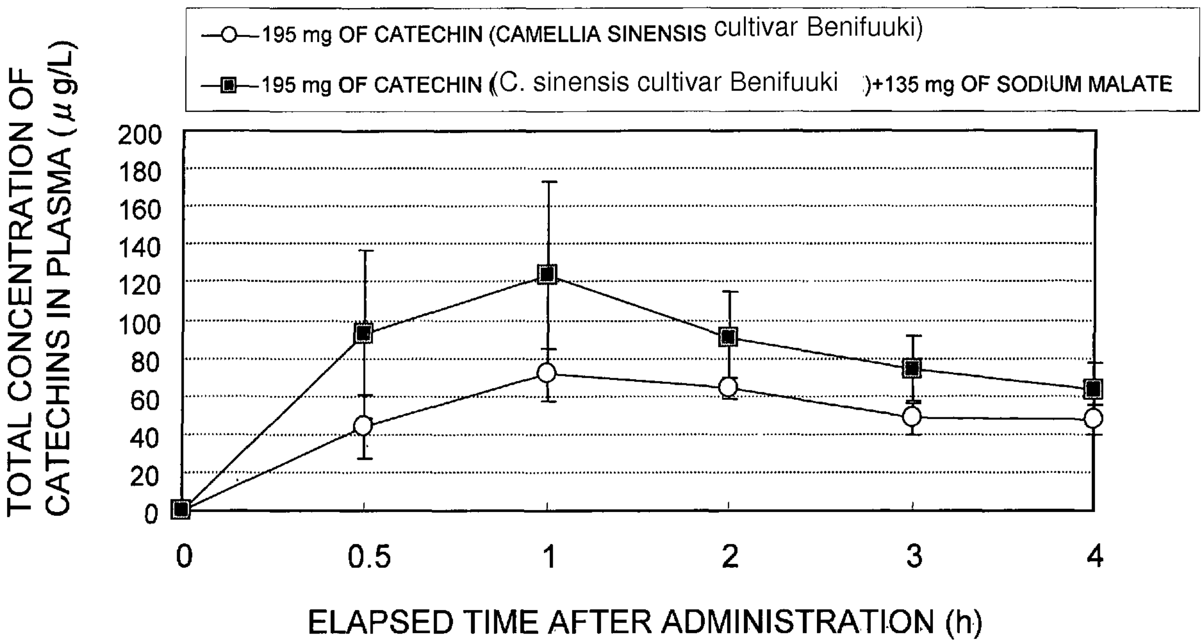

195 mg OF CATECHIN (CAMELLIA SINENSIS cultivar Benifuuki)
195 mg OF CATECHIN (C. sinensis cultivar Benifuuki )+135 mg OF SODIUM MALATE
TOTAL CONCENTRATION OF CATECHINS IN PLASMA (μ g/L)
200
180
160
140
120
100
80
60
40
20
0
0
0.5
1
2
3
4
ELAPSED TIME AFTER ADMINISTRATION (h)

FIG. 16

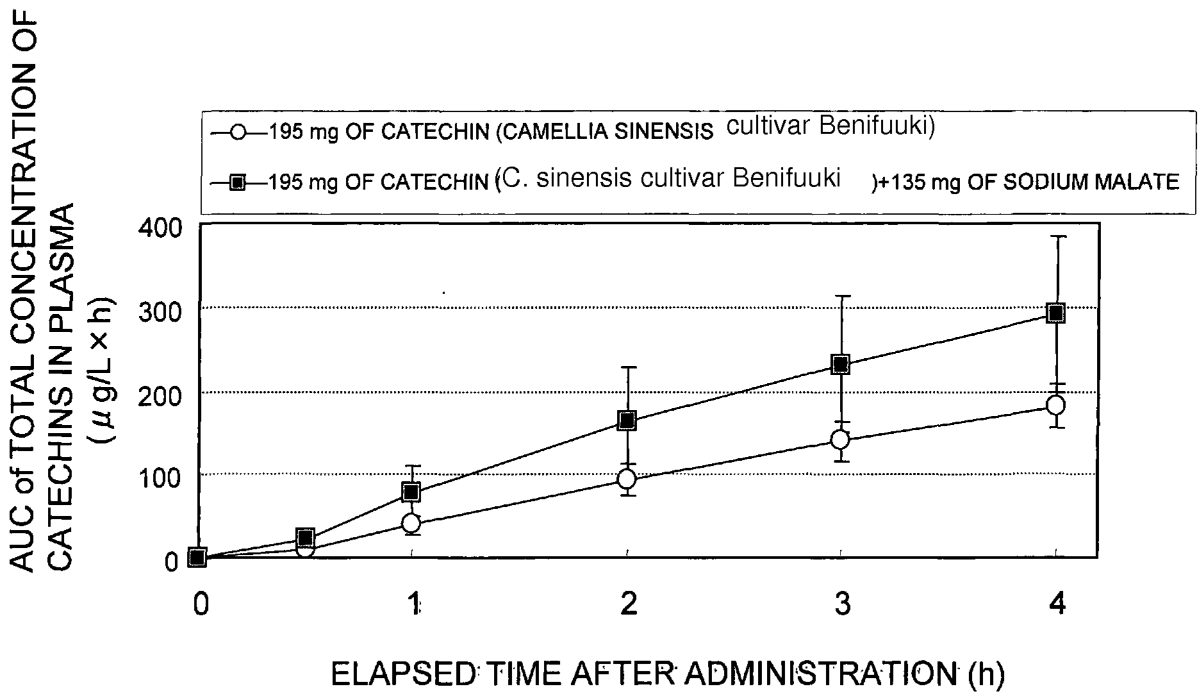

195 mg OF CATECHIN (CAMELLIA SINENSIS cultivar Benifuuki)
195 mg OF CATECHIN (C. sinensis cultivar Benifuuki )+135 mg OF SODIUM MALATE
AUC of TOTAL CONCENTRATION OF CATECHINS IN PLASMA ($\mu$ g/L × h)
400
300
200
100
0
0
1
2
3
4
ELAPSED TIME AFTER ADMINISTRATION (h)

FIG. 17

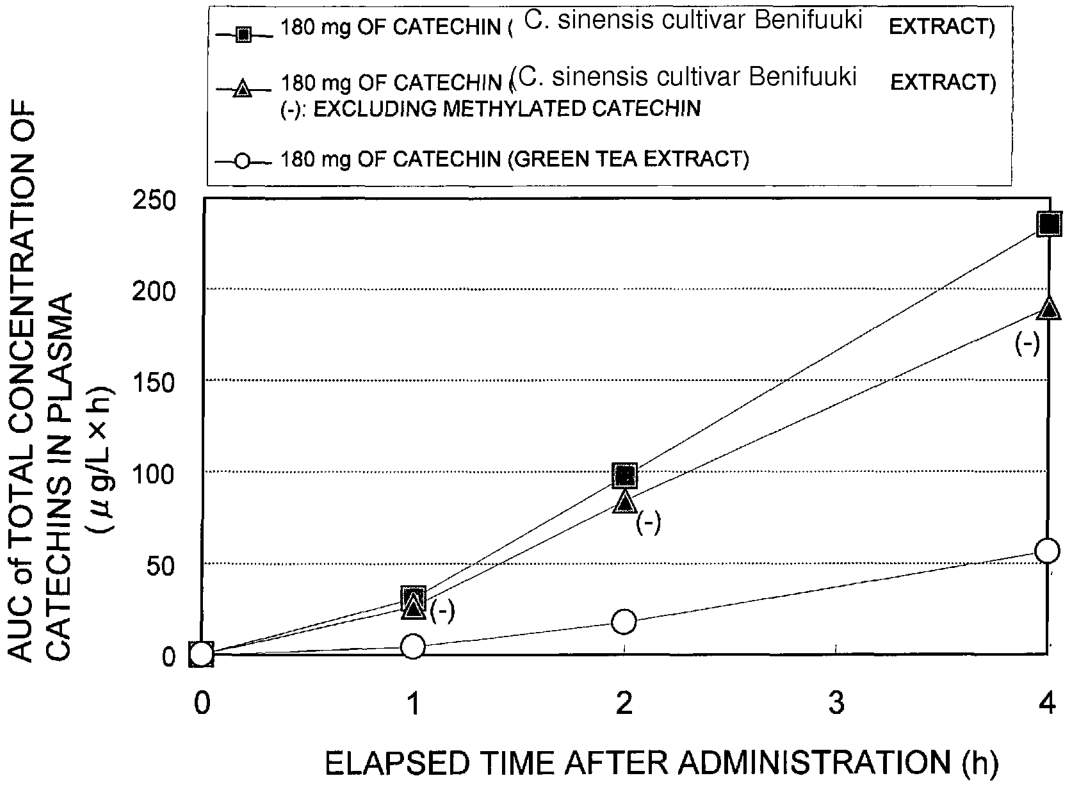
180 mg OF CATECHIN ( C. sinensis cultivar Benifuuki EXTRACT)
180 mg OF CATECHIN (C. sinensis cultivar Benifuuki EXTRACT)
(-): EXCLUDING METHYLATED CATECHIN
180 mg OF CATECHIN (GREEN TEA EXTRACT)
AUC of TOTAL CONCENTRATION OF CATECHINS IN PLASMA (μg/L×h)
250
200
150
100
50
0
(-)
(-)
(-)
0
1
2
3
4
ELAPSED TIME AFTER ADMINISTRATION (h)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002142677 A
- JP 2003169641 A
- JP 2003333989 A
- JP 2004041186 A
- JP 2007151467 A
- US 2008319052 A1


### Non-patent literature cited in the description


- **MAEDA-YAMAMOTO et al.** *Cytotoechnology,* 2007, vol. 55, 135-142
- **KATIYAR SK ; MUKHTAR H.** *Int J Oncol,* 1996, vol. 7, 133-141
- **BU-TIAN JI et al.** *Int J Cancer,* 1997, vol. 70, 255-258
- **SU LJ ; ARAB L.** *Public Health Nutr,* 2002, vol. 5, 419-425
- **DUFFY SJ et al.** *Arterioscler Thromb Vasc,* 2001, vol. 21, 1084-1089
- **NEGISHI H et al.** *J Nutr,* 2005, vol. 134, 38-42
- **NAGAO T et al.** *Am J Clin Nutr,* 2005, vol. 81, 122-9
- **MURASE T et al.** *Int J Obes,* 2002, vol. 26, 1459-64
- **SANO M et al.** *J Agric Food Chem,* 2003, vol. 51, 2912-2916
- **CHEN L et al.** *Drug Metab Dispos,* 1997, vol. 25, 1045-1050
- **ZHU M et al.** *Planta Med,* 2000, vol. 66, 444-447
- **WARDEN BA et al.** *J Nutr,* 2001, vol. 131, 1731-1737
- **CHOW et al.** *Cancer Epidemiol Biomarkers Prev,* 2001, vol. 10, 53-58
- **VAIDYANATHAN ; WALLE.** *Pharm Res,* 2001, vol. 18, 1420-1425